(19) **Europäisches Patentamt European Patent Office Office européen des brevets**

(11) **EP 3 657 888 B1**

(12) **EUROPEAN PATENT SPECIFICATION**

(45) Date of publication and mention of the grant of the patent:
**24.05.2023 Bulletin 2023/21**

(21) Application number: **18835188.6**

(22) Date of filing: **23.07.2018**

(51) International Patent Classification (IPC):
**H04W 72/04** *(2023.01)* **H04W 72/12** *(2023.01)*
**H04W 76/16** *(2018.01)* **H04W 88/06** *(2009.01)*

(52) Cooperative Patent Classification (CPC):
**H04W 72/0446; H04W 72/12; H04W 76/16; H04W 88/06**

(86) International application number:
**PCT/KR2018/008280**

(87) International publication number:
**WO 2019/017746 (24.01.2019 Gazette 2019/04)**

(54) **SIGNAL TRANSCEIVING METHOD BASED ON LTE AND NR IN WIRELESS COMMUNICATION SYSTEM, AND DEVICE FOR SAME**

VERFAHREN ZUM SENDEN/EMPFANGEN EINES SIGNALS AUF BASIS VON LTE UND NR IN EINEM DRAHTLOSKOMMUNIKATIONSSYSTEM UND VORRICHTUNG DAFÜR

PROCÉDÉ D'ÉMISSION-RÉCEPTION DE SIGNAL BASÉ SUR LES TECHNOLOGIES LTE ET NR DANS UN SYSTÈME DE COMMUNICATIONS SANS FIL, ET DISPOSITIF ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.07.2017 US 201762535234 P**
**11.08.2017 US 201762543975 P**
**07.09.2017 US 201762555630 P**
**02.10.2017 US 201762567195 P**

(43) Date of publication of application:
**27.05.2020 Bulletin 2020/22**

(73) Proprietor: **LG Electronics Inc.**
**Seoul 07336 (KR)**

(72) Inventors:
• **KIM, Youngtae**
**Seoul 06772 (KR)**
• **YI, Yunjung**
**Seoul 06772 (KR)**
• **KIM, Seonwook**
**Seoul 06772 (KR)**
• **PARK, Changhwan**
**Seoul 06772 (KR)**
• **BAE, Duckhyun**
**Seoul 06772 (KR)**

• **SEO, Inkwon**
**Seoul 06772 (KR)**
• **AHN, Joonkui**
**Seoul 06772 (KR)**
• **YOON, Sukhyon**
**Seoul 06772 (KR)**
• **LEE, Hyunho**
**Seoul 06772 (KR)**

(74) Representative: **Plasseraud IP**
**66, rue de la Chaussée d'Antin**
**75440 Paris Cedex 09 (FR)**

(56) References cited:
**WO-A1-2016/047994      US-A1- 2012 327 850**
**US-A1- 2014 050 205**

- LG ELECTRONICS: "Remaining details on UL sharing between LTE and NR", 3GPP DRAFT; R1-1710354 LTE-NR COEXISTENCE UL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, P.R. China; 20170630 17 June 2017 (2017-06-17), XP051304975, Retrieved from the Internet: URL:http://www.3gpp.org/ftp/tsg_ran/WG1_RL 1/TSGR1_AH/NR_AH_1706/Docs/ [retrieved on 2017-06-17]
- SAMSUNG: "LTE-NR coexistence for DL", 3GPP DRAFT; R1-1708061 LTE-NR COEXISTENCE FOR DL_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou, China; 20170515 - 20170519 6 May 2017 (2017-05-06), XP051262229, Retrieved from the Internet: URL:http://www.3gpp.org/ftp/tsg_ran/WG1_RL 1/TSGR1_89/Docs/ [retrieved on 2017-05-06]
- LG ELECTRONICS: "Remaining Details on UL Sharing between LTE and NR", R1-1710354, 3GPP TSG RAN WG1 Meeting Ad-Hoc, 17 June 2017 (2017-06-17), XP051304975, Qingdao, P.R. China
- SAMSUNG: "LTE-NR Coexistence for DL", RI-1708061, 3GPP TSG RAN WG1 #89, 6 May 2017 (2017-05-06), XP051262229, Hangzhou, China
- SAMSUNG: "LTE-NR Coexistence for UL", R1-1710763, 3GPP TSG RAN WG1 NR Ad-Hoc#2, 16 June 2017 (2017-06-16), XP051304374, Qingdao, P.R. China
- "Efficient Coexistence of NR with LTE", RI-1612009, 3GPP TSG RAN WG1 Meeting #87, 6 November 2016 (2016-11-06), XP051190819, Reno, USA

**Description**

## TECHNICAL FIELD

The present disclosure relates to a wireless communication system and, more particularly, to a method of transmitting and receiving signals based on long-term evolution (LTE) and new radio access technology (NR) in a wireless communication system and an apparatus therefor.

BACKGROUND ART

Wireless access systems have been widely deployed to provide various types of communication services such as voice or data. In general, a wireless access system is a multiple access system that supports communication of multiple users by sharing available system resources (bandwidth, transmission power, etc.) thereamong. For example, multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

As more communication devices have demanded higher communication capacity, there has been necessity of enhanced mobile broadband communication relative to legacy radio access technology (RAT). In addition, massive machine type communication (MTC) for providing various services at anytime and anywhere by connecting a plurality of devices and things to each other has also been required. Moreover, design of a communication system considering services/UEs sensitive to reliability and latency has been proposed.

As new RAT considering such enhanced mobile broadband communication, massive MTC, ultra-reliable and low latency communication (URLLC), and the like, a new RAT system has been proposed. In the present disclosure, the corresponding technology is referred to as new RAT or new radio (NR) for convenience of description. Document: LG ELECTRONICS, "Remaining details on UL sharing between LTE and NR", vol. RAN WG1, no. Qingdao, P.R. China; 20170630, (20170617), 3GPP DRAFT; R1-1710354 LTE-NR COEXISTENCE UL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/tsg_ran/WG1_RL1/TSGR1_AH/NR_AH_1706/Docs/, (20170617), relates to details of uplink sharing between LTE and NR.

## DETAILED DESCRIPTION OF THE DISCLOSURE

### Technical Problems

Hereinafter, a method of transmitting and receiving signals based on LTE and NR in a wireless communication system and an apparatus therefor will be proposed based on the above-described discussion.

Technical tasks obtainable from the present disclosure are non-limited by the above-mentioned technical task. And, other unmentioned technical tasks can be clearly understood from the following description by those having ordinary skill in the technical field to which the present disclosure pertains.

Technical Solutions

According to an aspect of the present disclosure, provided herein is a method according to claim 1.

The first RAT may be new RAT (NR) and the second RAT may be long-term evolution (LTE). The first signal may be an NR downlink signal and the second signal may be an LTE uplink signal.

In another aspect of the present disclosure, provided herein is a user equipment (UE) according to claim 2.

Any reference to inventions or embodiments not falling within the scope of the independent claims are to be interpreted as examples useful for understanding the invention.

Advantageous Effects

According to embodiments of the present disclosure, LTE and NR based signals may be efficiently transmitted and received in a wireless communication system.

Effects obtainable from the present disclosure are non-limited by the above mentioned effect. And, other unmentioned effects can be clearly understood from the following description by those having ordinary skill in the technical field to which the present disclosure pertains Description of Drawings

The accompanying drawings, which are included to provide a further understanding of the disclosure and are incorporated in and constitute a part of this specification, illustrate embodiments of the disclosure and together with the description serve to explain the principles of the disclosure.

FIG. 1 schematically illustrates an E-UMTS network structure as an example of a wireless communication system.

FIG. 2 illustrates control plane and user plane structures of a radio interface protocol between a UE and an E-UTRAN on the basis of the 3GPP wireless access network standard.

FIG. 3 illustrates physical channels used in a 3GPP system and a general signal transmission method using the same.

FIG. 4 illustrates a radio frame structure used in LTE.

FIG. 5 illustrates a resource grid for a downlink slot.

FIG. 6 illustrates a structure of a downlink radio frame used in an LTE system.

FIG. 7 illustrates a structure of an uplink radio frame used in an LTE system.

FIG. 8 is a reference diagram for explaining a self-contained slot structure in an NR system.

FIGS. 9 and 10 are reference diagrams for explaining methods for connecting TXRUs to antenna elements.

FIG. 11 is a reference diagram for explaining hybrid beamforming.

FIG. 12A and 12B are reference diagrams for explaining a scenario that may occur when LTE UL and NR UL are separated in a time duration.

FIG. 13A and 13B are reference diagrams for explaining a scenario that may occur when LTE UL and NR DL are separated in a time duration.

FIG. 14 is a reference diagram for explaining a difference between time gaps and a difference between NR and LTE frame structures

FIG. 15 illustrates a base station (BS) and a user equipment (UE) applicable to an embodiment of the present disclosure.

BEST MODE FOR CARRYING OUT THE DISCLOSURE

A 3rd generation partnership project long term evolution (3GPP LTE) (hereinafter, referred to as 'LTE') communication system which is an example of a wireless communication system to which the present disclosure can be applied will be described in brief.

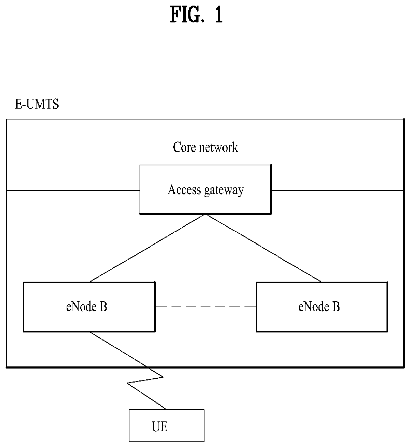

FIG. 1 is a diagram illustrating a network structure of an Evolved Universal Mobile Telecommunications System (E-UMTS) which is an example of a wireless communication system. The E-UMTS is an evolved version of the conventional UMTS, and its basic standardization is in progress under the 3rd Generation Partnership Project (3GPP). The E-UMTS may be referred to as a Long Term Evolution (LTE) system. Details of the technical specifications of the UMTS and E-UMTS may be understood with reference to Release 7 and Release 8 of "3rd Generation Partnership Project; Technical Specification Group Radio Access Network".

Referring to FIG. 1, the E-UMTS includes a User Equipment (UE), base stations (eNode B; eNB), and an Access Gateway (AG) which is located at an end of a network (E-UTRAN) and connected to an external network. The base stations may simultaneously transmit multiple data streams for a broadcast service, a multicast service and/or a unicast service.

One or more cells exist for one base station. One cell is set to one of bandwidths of 1.44, 3, 5, 10, 15 and 20MHz to provide a downlink or uplink transport service to several user equipments. Different cells may be set to provide different bandwidths. Also, one base station controls data transmission and reception for a plurality of user equipments. The base station transmits downlink (DL) scheduling information of downlink data to the corresponding user equipment to notify the corresponding user equipment of time and frequency domains to which data will be transmitted and information related to encoding, data size, and hybrid automatic repeat and request (HARQ). Also, the base station transmits uplink (UL) scheduling information of uplink data to the corresponding user equipment to notify the corresponding user equipment of time and frequency domains that can be used by the corresponding user equipment, and information related to encoding, data size, and HARQ. An interface for transmitting user traffic or control traffic may be used between the base stations. A Core Network (CN) may include the AG and a network node or the like for user registration of the user equipment. The AG manages mobility of the user equipment on a Tracking Area (TA) basis, wherein one TA includes a plurality of cells.

Although the wireless communication technology developed based on WCDMA has been evolved into LTE, request and expectation of users and providers have continued to increase. Also, since another wireless access technology is being continuously developed, new evolution of the wireless communication technology will be required for competitiveness in the future. In this respect, reduction of cost per bit, increase of available service, use of adaptable frequency band, simple structure and open type interface, proper power consumption of the user equipment, etc. are required.

The following technology may be used for various wireless access technologies such as CDMA (code division multiple access), FDMA (frequency division multiple access), TDMA (time division multiple access), OFDMA (orthogonal frequency division multiple access), and SC-FDMA (single carrier frequency division multiple access). The CDMA may be implemented by the radio technology such as UTRA (universal terrestrial radio access) or CDMA2000. The TDMA may be implemented by the radio technology such as global system for mobile communications (GSM)/general packet radio service (GPRS)/enhanced data rates for GSM evolution (EDGE). The OFDMA may be implemented by the radio technology such as IEEE 802.11 (Wi-Fi), IEEE 802.16 (WiMAX), IEEE 802.20, and evolved UTRA (E-UTRA). The UTRA is a part of a universal mobile telecommunications system (UMTS). A 3rd generation partnership project long term evolution (3GPP LTE) is a part of an evolved UMTS (E-UMTS) that uses E-UTRA, and adopts OFDMA in a downlink and SC-FDMA in an uplink. LTE-advanced (LTE-A) is an evolved version of the 3GPP LTE..

For clarification of the description, although the following embodiments will be described based on the 3GPP LTE/LTE-A, it is to be understood that the technical spirits of the present disclosure are not limited to the 3GPP LTE/LTE-A. Also, specific terminologies hereinafter used in the embodiments of the present disclosure are provided to assist understanding of the present disclosure.

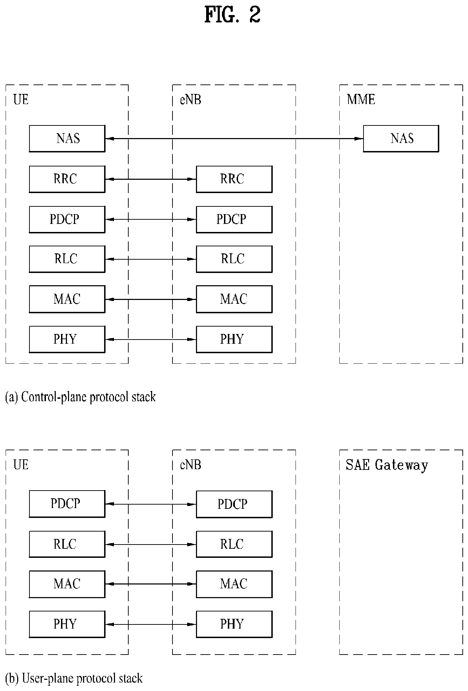

FIG. 2 is a diagram illustrating structures of a control plane and a user plane of a radio interface protocol between a user equipment and E-UTRAN based on the 3GPP radio access network standard. The control plane means a passageway where control messages are transmitted, wherein the control messages are used by the user equipment and the network to manage call. The user plane means a passageway where data generated in an application layer, for example, voice data or Internet packet data are transmitted.

A physical layer as the first layer provides an information transfer service to an upper layer using a physical channel. The physical layer is connected to a medium access control (MAC) layer via a transport channel, wherein the medium access control layer is located above the physical layer. Data are transferred between the medium access control layer and the physical layer via the transport channel. Data are transferred between one physical layer of a transmitting side and the other physical layer of a receiving side via the physical channel. The physical channel uses time and frequency as radio resources. In more detail, the physical channel is modulated in accordance with an orthogonal frequency division multiple access (OFDMA) scheme in a downlink, and is modulated in accordance with a single carrier frequency division multiple access (SC-FDMA) scheme in an uplink.

A medium access control (MAC) layer of the second layer provides a service to a radio link control (RLC) layer above the MAC layer via a logical channel. The RLC layer of the second layer supports reliable data transmission. The RLC layer may be implemented as a functional block inside the MAC layer. In order to effectively transmit data using IP packets such as IPv4 or IPv6 within a radio interface having a narrow bandwidth, a packet data convergence protocol (PDCP) layer of the second layer performs header compression to reduce the size of unnecessary control information.

A radio resource control (RRC) layer located on the lowest part of the third layer is defined in the control plane only. The RRC layer is associated with configuration, reconfiguration and release of radio bearers ('RBs') to be in charge of controlling the logical, transport and physical channels. In this case, the RB means a service provided by the second layer for the data transfer between the user equipment and the network. To this end, the RRC layers of the user equipment and the network exchange RRC message with each other. If the RRC layer of the user equipment is RRC connected with the RRC layer of the network, the user equipment is in an RRC connected mode. If not so, the user equipment is in an RRC idle mode. A non-access stratum (NAS) layer located above the RRC layer performs functions such as session management and mobility management.

One cell constituting a base station eNB is set to one of bandwidths of 1.4, 3.5, 5, 10, 15, and 20MHz and provides a downlink or uplink transmission service to several user equipments. At this time, different cells may be set to provide different bandwidths.

As downlink transport channels carrying data from the network to the user equipment, there are provided a broadcast channel (BCH) carrying system information, a paging channel (PCH) carrying paging message, and a downlink shared channel (SCH) carrying user traffic or control messages. Traffic or control messages of a downlink multicast or broadcast service may be transmitted via the downlink SCH or an additional downlink multicast channel (MCH). Meanwhile, as uplink transport channels carrying data from the user equipment to the network, there are provided a random access channel (RACH) carrying an initial control message and an uplink shared channel (UL-SCH) carrying user traffic or control message. As logical channels located above the transport channels and mapped with the transport channels, there are provided a broadcast control channel (BCCH), a paging control channel (PCCH), a common control channel (CCCH), a multicast control channel (MCCH), and a multicast traffic channel (MTCH).

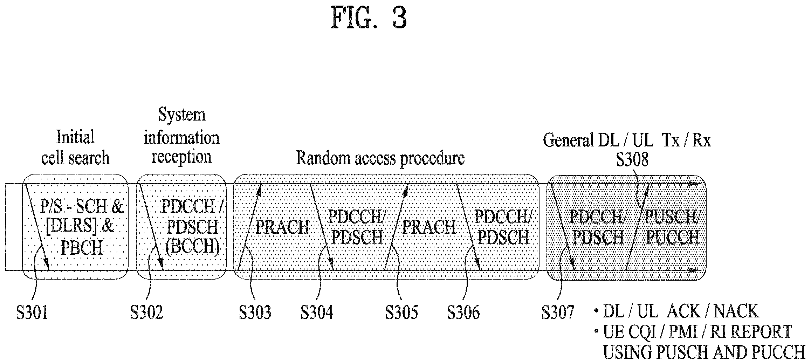

FIG. 3 is a diagram illustrating physical channels used in a 3GPP LTE system and a general method for transmitting a signal using the physical channels.

The user equipment performs initial cell search such as synchronizing with the base station when it newly enters a cell or the power is turned on at step S301. To this end, the user equipment synchronizes with the base station by receiving a primary synchronization channel (P-SCH) and a secondary synchronization channel (S-SCH) from the base station, and acquires information such as cell ID, etc. Afterwards, the user equipment may acquire broadcast information within the cell by receiving a physical broadcast channel (PBCH) from the base station. Meanwhile, the user equipment may identify a downlink channel status by receiving a downlink reference signal (DL RS) at the initial cell search step.

**EP 3 657 888 B1**

The user equipment which has finished the initial cell search may acquire more detailed system information by receiving a physical downlink shared channel (PDSCH) in accordance with a physical downlink control channel (PDCCH) and information carried in the PDCCH at step S302.

Afterwards, the user equipment may perform a random access procedure (RACH) such as steps S303 to S306 to complete access to the base station. To this end, the user equipment may transmit a preamble through a physical random access channel (PRACH) (S303), and may receive a response message to the preamble through the PDCCH and the PDSCH corresponding to the PDCCH (S304). In case of a contention based RACH, the user equipment may perform a contention resolution procedure such as transmission (S305) of additional physical random access channel and reception (S306) of the physical downlink control channel and the physical downlink shared channel corresponding to the physical downlink control channel.

The user equipment which has performed the aforementioned steps may receive the physical downlink control channel (PDCCH)/physical downlink shared channel (PDSCH) (S307) and transmit a physical uplink shared channel (PUSCH) and a physical uplink control channel (PUCCH) (S308), as a general procedure of transmitting uplink/downlink signals. Control information transmitted from the user equipment to the base station will be referred to as uplink control information (UCI). The UCI includes HARQ ACK/NACK (Hybrid Automatic Repeat and request Acknowledgement/Negative-ACK), SR (Scheduling Request), CSI (Channel State Information), etc. In this specification, the HARQ ACK/NACK will be referred to as HARQ-ACK or ACK/NACK (A/N). The HARQ-ACK includes at least one of positive ACK (simply, referred to as ACK), negative ACK (NACK), DTX and NACK/DTX. The CSI includes CQI (Channel Quality Indicator), PMI (Precoding Matrix Indicator), RI (Rank Indication), etc. Although the UCI is generally transmitted through the PUCCH, it may be transmitted through the PUSCH if control information and traffic data should be transmitted at the same time. Also, the user equipment may non-periodically transmit the UCI through the PUSCH in accordance with request/command of the network.

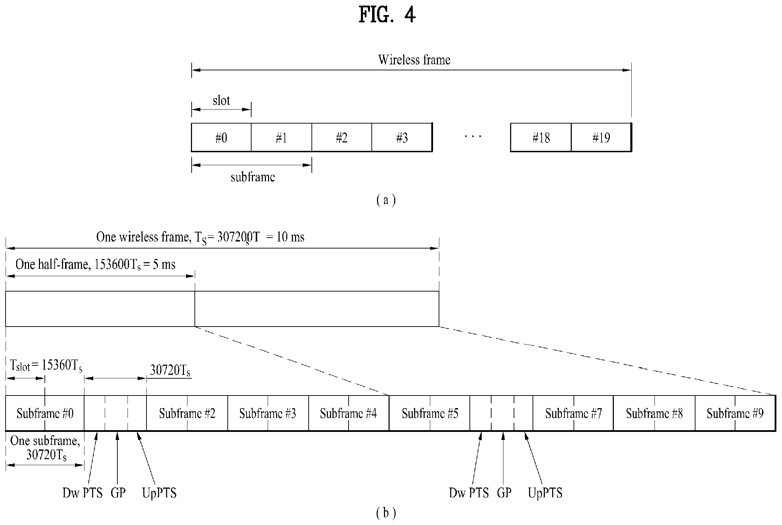

FIG. 4 is a diagram illustrating a structure of a radio frame used in an LTE system.

Referring to FIG. 4, in a cellular OFDM radio packet communication system, uplink/downlink data packet transmission is performed in a unit of subframe, wherein one subframe is defined by a given time interval that includes a plurality of OFDM symbols. The 3GPP LTE standard supports a type 1 radio frame structure applicable to frequency division duplex (FDD) and a type 2 radio frame structure applicable to time division duplex (TDD).

FIG. 4(a) is a diagram illustrating a structure of a type 1 radio frame. The downlink radio frame includes 10 subframes, each of which includes two slots in a time domain. A time required to transmit one subframe will be referred to as a transmission time interval (TTI). For example, one subframe may have a length of 1ms, and one slot may have a length of 0.5ms. One slot includes a plurality of OFDM symbols in a time domain and a plurality of resource blocks (RB) in a frequency domain. Since the 3GPP LTE system uses OFDM in a downlink, OFDM symbols represent one symbol interval. The OFDM symbol may be referred to as SC-FDMA symbol or symbol interval. The resource block (RB) as a resource allocation unit may include a plurality of continuous subcarriers in one slot.

The number of OFDM symbols included in one slot may be varied depending on configuration of a cyclic prefix (CP). Examples of the CP include an extended CP and a normal CP. For example, if the OFDM symbols are configured by the normal CP, the number of OFDM symbols included in one slot may be 7. If the OFDM symbols are configured by the extended CP, since the length of one OFDM symbol is increased, the number of OFDM symbols included in one slot is smaller than that of OFDM symbols in case of the normal CP. For example, in case of the extended CP, the number of OFDM symbols included in one slot may be 6. If a channel state is unstable like the case where the user equipment moves at high speed, the extended CP may be used to reduce inter-symbol interference.

If the normal CP is used, since one slot includes seven OFDM symbols, one subframe includes 14 OFDM symbols. At this time, first maximum three OFDM symbols of each subframe may be allocated to a physical downlink control channel (PDCCH), and the other OFDM symbols may be allocated to a physical downlink shared channel (PDSCH).

FIG. 4(b) is a diagram illustrating a structure of a type 2 radio frame. The type 2 radio frame includes two half frames, each of which includes four general subframes, which include two slots, and a special subframe which includes a downlink pilot time slot (DwPTS), a guard period (GP), and an uplink pilot time slot (UpPTS).

In the special subframe, the DwPTS is used for initial cell search, synchronization or channel estimation at the user equipment. The UpPTS is used for channel estimation at the base station and uplink transmission synchronization of the user equipment. In other words, the DwPTS is used for downlink transmission, whereas the UpPTS is used for uplink transmission. Especially, the UpPTS is used for PRACH preamble or SRS transmission. Also, the guard period is to remove interference occurring in the uplink due to multipath delay of downlink signals between the uplink and the downlink.

Configuration of the special subframe is defined in the current 3GPP standard document as illustrated in Table 1 below. Table 1 illustrates the DwPTS and the UpPTS in case of $T_s = 1/(15000 \times 2048)$, and the other region is configured for the guard period.

6

[Table 1]

| Special subframe configuration | Normal cyclic prefix in downlink | | | Extended cyclic prefix in downlink | | |
|---|---|---|---|---|---|---|
| | DwPTS | UpPTS | | DwPTS | UpPTS | |
| | | Normal cyclic prefix in uplink | Extended cyclic prefix in uplink | | Normal cyclic prefix in uplink | Extended cyclic prefix in uplink |
| 0 | $6592 \cdot T_s$ | $2192 \cdot T_s$ | $2560 \cdot T_s$ | $7680 \cdot T_s$ | $2192 \cdot T_s$ | $2560 \cdot T_s$ |
| 1 | $19760 \cdot T_s$ | | | $20480 \cdot T_s$ | | |
| 2 | $21952 \cdot T_s$ | | | $23040 \cdot T_s$ | | |
| 3 | $24144 \cdot T_s$ | | | $25600 \cdot T_s$ | | |
| 4 | $26336 \cdot T_s$ | | | | | |
| 5 | $6592 \cdot T_s$ | $4384 \cdot T_s$ | $5120 \cdot T_s$ | $20480 \cdot T_s$ | $4384 \cdot T_s$ | $5120 \cdot T_s$ |
| 6 | $19760 \cdot T_s$ | | | $23040 \cdot T_s$ | | |
| 7 | $21952 \cdot T_s$ | | | $12800 \cdot T_s$ | | |
| 8 | $24144 \cdot T_s$ | | | - | - | - |
| 9 | $13168 \cdot T_s$ | | | - | - | - |

In the meantime, the structure of the type 2 radio frame, that is, uplink/downlink configuration (UL/DL configuration) in the TDD system is as illustrated in Table 2 below.

[Table 2]

| Uplink-downlink configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

In the above Table 2, D means the downlink subframe, U means the uplink subframe, and S means the special subframe. Also, Table 2 also illustrates a downlink-uplink switching period in the uplink/downlink subframe configuration of each system.

The structure of the aforementioned radio frame is only exemplary, and various modifications may be made in the number of subframes included in the radio frame, the number of slots included in the subframe, or the number of symbols included in the slot.

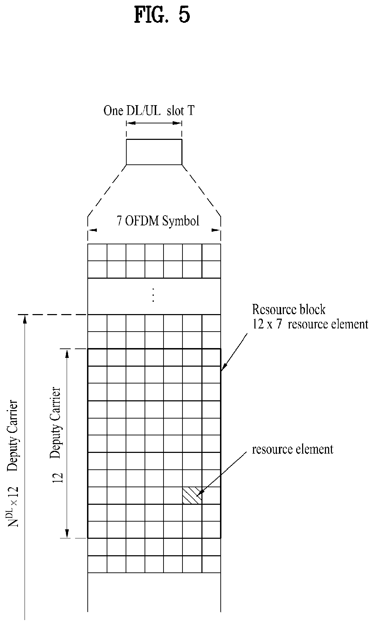

FIG. 5 illustrates a resource grid for a downlink slot.

Referring to FIG. 5, a DL slot includes $N_{symb}^{DL}$ OFDM symbols in a time domain and NRB resource blocks in a frequency domain. Since each of the resource blocks includes $N_{sc}^{RB}$ subcarriers, the DL slot includes $N_{RB}^{DL} \times N_{sc}^{RB}$ subcarriers in the frequency domain. Although FIG. 5 shows an example in which the DL slot includes 7 OFDM symbols and the resource block includes 12 subcarriers, the present disclosure is not limited thereto. For instance, the number of OFDM symbols included in the DL slot can vary depending to a length of a cyclic prefix (CP).

Each element on a resource grid is referred to as a resource element (RE) and a single resource element is indicated by one OFDM symbol index and one subcarrier index. A single RB is configured with $N_{symb}^{DL} \times N_{sc}^{RB}$ resource elements. The number (NRB) of resource blocks included in the DL slot depends on a DL transmission bandwidth configured in a cell.

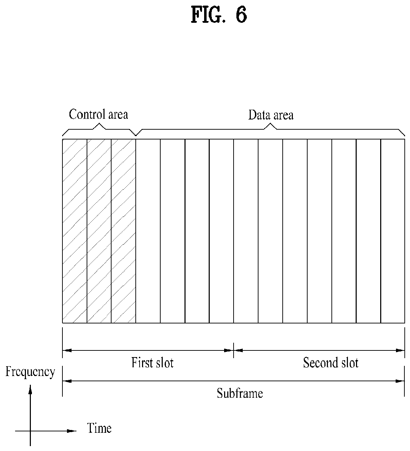

FIG. 6 illustrates a structure of a downlink radio frame.

Referring to FIG. 6, up to 3 (or 4) OFDM symbols located at a head part of a first slot of a subframe correspond to a control region to which a control channel is assigned. And, the rest of OFDM symbols correspond to a data region to which PDSCH (physical downlink shared channel) is assigned. For example, DL control channels used in the LTE system may include a PCFICH (physical control format indicator channel), a PDCCH (physical downlink control channel), a PHICH (physical hybrid ARQ indicator channel) and the like. The PCFICH is transmitted on a first OFDM symbol of a subframe and carries information on the number of OFDM symbols in the subframe used for control channel transmission. The PHICH carries an HARQ ACK/NACK (hybrid automatic repeat request acknowledgment/negative-acknowledgment) signal in response to UL transmission.

Control information transmitted on the PDCCH is called DC1 (downlink control information). The DCI includes resource allocation information and other control information for a user equipment or a user equipment group. For instance, the DCI may include UL/DL scheduling information, UL transmission (Tx) power control command and the like.

The PDCCH carries transmission format and resource allocation information of a DL-SCH (downlink shared channel), transmission format and resource allocation information of a UL-SCH (uplink shared channel), paging information on a PCH (paging channel), system information on a DL-SCH, resource allocation information of a higher-layer control message such as a random access response transmitted on a PDSCH, a Tx power control command set for individual user equipments in a user equipment group, a Tx power control command, activation indication information of a VoIP (voice over IP) and the like. A plurality of PDCCHs may be transmitted in a control region. A user equipment can monitor a plurality of PDCCHs. The PDCCH is transmitted on aggregation of one or more consecutive CCEs (control channel elements). In this case, the CCE is a logical assignment unit used in providing the PDCCH with a coding rate based on a radio channel state. The CCE corresponds to a plurality of REGs (resource element groups). The PDCCH format and the number of PDCCH bits are determined depending on the number of CCEs. A base station determines the PDCCH format in accordance with DCI to be transmitted to a user equipment and attaches CRC (cyclic redundancy check) to control information. The CRC is masked with an identifier (e.g., RNTI (radio network temporary identifier)) in accordance with an owner or a purpose of use. For instance, if a PDCCH is provided for a specific user equipment, CRC may be masked with an identifier (e.g., C-RNTI (cell-RNTI)) of the corresponding user equipment. If a PDCCH is provided for a paging message, CRC may be masked with a paging identifier (e.g., P-RNTI (paging-RNTI)). If a PDCCH is provided for system information (particularly, SIC (system information block)), CRC may be masked with an SI-RNTI (system information-RNTI). In addition, if a PDCCH is provided for a random access response, CRC may be masked with an RA-RNTI (random access-RNTI).

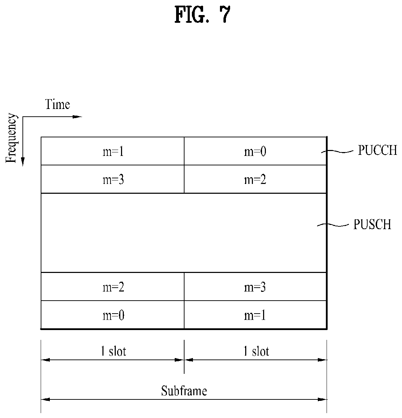

FIG. 7 illustrates a structure of an uplink subframe used in an LTE system.

Referring to FIG. 7, an uplink subframe includes a plurality (e.g., 2 slots) of slots. Each of the slots may include a different number of SC-FDMA symbols depending on a length of CP. The UL subframe may be divided into a data region and a control region in the frequency domain. The data region includes a PUSCH and is used to transmit such a data signal as audio and the like. The control region includes a PUCCH and is used to transmit UCI (uplink control information). The PUCCH includes an RB pair located at both ends of the data region on a frequency axis and is hopped on a slot boundary.

The PUCCH can be used to transmit the following control information.

- SR (scheduling request): This is information used to request a UL-SCH resource and is transmitted using an OOK (on-off keying) scheme.
- HARQ ACK/NACK: This is a response signal in response to a DL data packet on a PDSCH and indicates whether the DL data packet has been successfully received. 1-bit ACK/NACK is transmitted as a response to a single downlink codeword and 2-bit ACK/NACK is transmitted as a response to two downlink codewords.
- CSI (channel state information): This is feedback information on a downlink channel. The CSI includes a channel quality indicator (CQI). MIMO (multiple input multiple output) related feedback information includes a rank indicator (RI), a precoding matrix indicator (PMI), a precoding type indicator (PTI) and the like. 20-bit is used in each subframe.

The amount of control information (UCI) that a user equipment can transmit in a subframe depends on the number of SC-FDMA symbols available for transmission of the control information. The SC-FDMA symbols available for the transmission of the control information correspond to the rest of SC-FDMA symbols except SC-FDMA symbols used for transmitting a reference signal in the subframe. In case of a subframe in which a sounding reference signal (SRS) is configured, the last SC-FDMA symbol of the subframe is excluded from the SC-FDMA symbols available for the transmission of the control information. The reference signal is used for coherent detection of a PUCCH.

Hereinbelow, a new radio access technology system will be described. As more communication devices have demanded higher communication capacity, there has been necessity of enhanced mobile broadband communication relative to legacy radio access technology (RAT). In addition, massive machine type communication (MTC) for providing various services at anytime and anywhere by connecting a plurality of devices and things to each other has also been required. Moreover, design of a communication system considering services/UEs sensitive to reliability and latency has been proposed.

As new RAT considering such enhanced mobile broadband communication, massive MTC, ultra-reliable and low latency communication (URLLC), and the like, a new RAT system has been proposed. In the present disclosure, the corresponding technology is referred to as new RAT or new radio (NR) for convenience of description.

The NR system to which the present disclosure is applicable supports various OFDM numerologies shown in the following table. In this case, the value of $\mu$ and cyclic prefix information per carrier bandwidth part may be signaled for each of DL and UL. For example, the value of $\mu$ and cyclic prefix information per DL carrier bandwidth part may be signaled though DL-BWP-mu and DL-MWP-cp corresponding to higher layer signaling. As another example, the value of $\mu$ and cyclic prefix information per UL carrier bandwidth part may be signaled though UL-BWP-mu and UL-MWP-cp corresponding to higher layer signaling.

[Table 3]

| $\mu$ | $\Delta f = 2^{\mu} \cdot 15$[kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

A frame structure in NR will now be described. For DL and UL transmission, a frame having a length of 10 ms is configured. The frame may include 10 subframes, each having a length of 1 ms. In this case, the number of consecutive

$$N_{\text{symb}}^{\text{subframe}\mu} = N_{\text{symb}}^{\text{slot}} N_{\text{slot}}^{\text{subframe}\mu}$$

OFDM symbols in each subframe is .

Each subframe may be composed of two half-frames with the same size. In this case, the two half-frames are composed of subframes 0 to 4 and subframes 5 to 9, respectively.

Regarding the subcarrier spacing $\mu$, slots may be numbered within one subframe in ascending order like

$$n_s^{\mu} \in \left\{ 0,...., N_{\text{slot}}^{\text{subframe}, \mu} - 1 \right\}$$

and may also be numbered within one frame in ascending order like

$$n_{s,f}^{\mu} \in \left\{ 0,...., N_{\text{slot}}^{\text{frame}, \mu} - 1 \right\}$$

. In this case, the number of consecutive OFDM symbols ( $N_{\text{symb}}^{\text{slot}}$ ) in one slot may be determined as shown in the following table according to the cyclic prefix. The start slot ( $n_s^{\mu}$ ) of one subframe is aligned with the start OFDM symbol ( $n_s^{\mu} N_{\text{symb}}^{\text{slot}}$ ) of the same subframe in the time dimension. Table 4 below shows the number of OFDM symbols in each slot/frame/subframe in the case of a normal cyclic prefix, and Table 5 below shows the number of OFDM symbols in each slot/frame/subframe in the case of an extended cyclic prefix.

[Table 4]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Table 5]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

In the NR system to which the present disclosure is applicable, a self-contained slot structure may be applied based on the above-described slot structure.

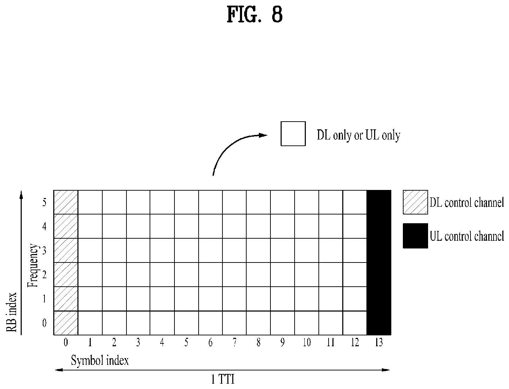

FIG. 8 is a reference diagram for explaining a self-contained slot structure applicable to the present disclosure.

In FIG. 8, the hatched area (e.g., symbol index = 0) indicates a DL control region, and the black area (e.g., symbol index = 13) indicates a UL control region. The remaining area (e.g., symbol index = 1 to 12) may be used for DL or UL data transmission.

Based on this structure, the eNB and UE may sequentially perform DL transmission and UL transmission in one slot. That is, the eNB and UE may transmit and receive DL data and UL ACK/NACK in response to the DL data in one slot. Consequently, due to such a structure, it is possible to reduce a time required until data retransmission in the case in which a data transmission error occurs, thereby minimizing the latency of final data transmission.

In this self-contained slot structure, a predetermined length of a time gap is required for the process of allowing the eNB and UE to switch from transmission mode to reception mode and vice versa. To this end, in the self-contained slot structure, some OFDM symbols at the time of switching from DL to UL are set as a guard period (GP).

Although the case in which the self-contained slot structure includes both the DL and UL control regions has been described above, these control regions may be selectively included in the self-contained slot structure. In other words, the self-contained slot structure according to the present disclosure may include either the DL control region or the UL control region as well as both the DL and UL control regions as illustrated in FIG. 8.

For example, the slot may have various slot formats. In this case, OFDM symbols in each slot may be divided into DL symbols (denoted by 'D'), flexible symbols (denoted by 'X'), and UL symbols (denoted by 'U').

Thus, the UE may assume that DL transmission occurs only in symbols denoted by 'D' and 'X' in the DL slot. Similarly, the UE may assume that UL transmission occurs only in symbols denoted by 'U' and 'X' in the UL slot.

Hereinafter, analog beamforming will be described.

In a millimeter wave (mmW) system, since a wavelength is short, a plurality of antenna elements may be installed in the same area. That is, considering that the wavelength at 30 GHz band is 1 cm, a total of 100 antenna elements may be installed in a 5 * 5 cm panel at intervals of 0.5 lambda (wavelength) in the case of a 2-dimensional array. Therefore, in the mmW system, it is possible to improve the coverage or throughput by increasing the beamforming (BF) gain using multiple antenna elements.

In this case, each antenna element may include a transceiver unit (TXRU) to enable adjustment of transmit power and phase per antenna element. By doing so, each antenna element may perform independent beamforming per frequency resource.

However, installing TXRUs in all of the about 100 antenna elements is less feasible in terms of cost. Therefore, a method of mapping a plurality of antenna elements to one TXRU and adjusting the direction of a beam using an analog phase shifter has been considered. However, this method is disadvantageous in that frequency selective beamforming is difficult because only one beam direction is generated over the full band.

To solve this problem, as an intermediate form of digital BF and analog BF, hybrid BF with B TXRUs that are fewer than Q antenna elements may be considered. In the case of the hybrid BF, the number of beam directions that may be transmitted at the same time is limited to B or less, which depends on how B TXRUs and Q antenna elements are connected.

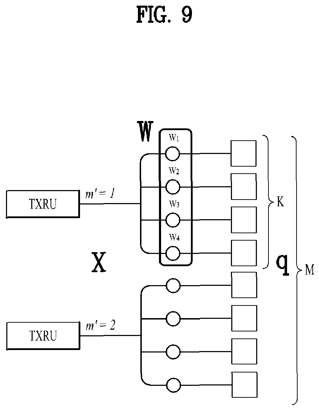

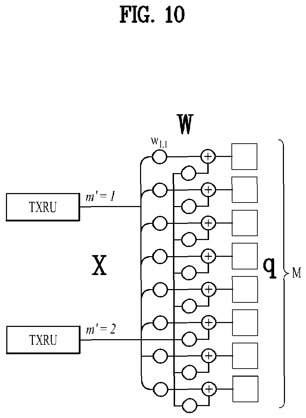

FIGS. 9 and 10 are diagrams illustrating representative methods for connecting TXRUs to antenna elements. Here, the TXRU virtualization model represents the relationship between TXRU output signals and antenna element output signals.

FIG. 9 illustrates a method for connecting TXRUs to sub-arrays. In FIG. 9, an antenna element is connected to only one TXRU.

Meanwhile, FIG. 10 illustrates a method for connecting all TXRUs to all antenna elements. In FIG. 10, an antenna element is connected to all TXRUs. In this case, separate addition units are required to connect an antenna element to all TXRUs as illustrated in FIG. 8.

In FIGS. 9 and 10, W indicates a phase vector weighted by an analog phase shifter. That is, W is a main parameter determining the direction of analog beamforming. In this case, the mapping relationship between CSI-RS antenna ports and TXRUs may be 1:1 or 1-to-many.

The configuration illustrated in FIG. 9 has a disadvantage in that it is difficult to achieve BF focusing but has an advantage in that all antennas may be configured at low cost.

The configuration illustrated in FIG. 10 is advantageous in that beamforming focusing may be easily achieved. However, since all antenna elements are connected to the TXRU, the configuration has a disadvantage of increase in cost.

When a plurality of antennas is used in the NR system to which the present disclosure is applicable, the hybrid BF method obtained by combining digital BF and analog BF may be applied. In this case, analog (or radio frequency (RF)) BF means an operation in which precoding (or combining) is performed at an RF end. In the case of hybrid BF, precoding (or combining) is performed at each of a baseband end and the RF end. Thus, hybrid BF is advantageous in that it guarantees performance similar to digital BF while reducing the number of RF chains and digital-to-analog (D/A) (or analog-to-digital (A/D)) converters.

For convenience of description, the hybrid BF structure may be represented by N TXRUs and M physical antennas. In this case, digital BF for L data layers to be transmitted by a transmitting end may be represented by an N * L (N by L) matrix. Thereafter, N converted digital signals are converted into analog signals by the TXRUs, and then analog BF, which may be represented by an M * N (M by N) matrix, is applied to the converted signals.

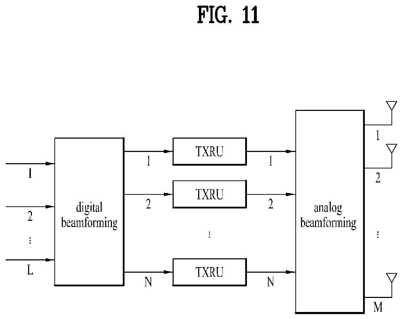

FIG. 11 is a schematic diagram illustrating a hybrid BF structure from the perspective of TXRUs and physical antennas. In FIG. 11, the number of digital beams is L and the number of analog beams is N.

Additionally, a method for providing efficient BF to UEs located in a specific area by designing an eNB capable of changing analog BF on a symbol basis has been considered in the NR system. Further, when N TXRUs and M RF antennas are defined as one antenna panel, a method of introducing a plurality of antenna panels in which independent hybrid BF may be applied has also been considered in the NR system according to the present disclosure.

When the eNB uses a plurality of analog beams as described above, each UE has a different analog beam suitable for signal reception. Thus, a beam sweeping operation in which the eNB transmits signals (at least synchronization signals, system information, paging, etc.) by applying a different analog beam to each symbol in a specific subframe in order to allow all UEs to have reception opportunities has been considered in the NR system to which the present disclosure is applicable.

The present disclosure proposes a method of relocating a physical layer (PHY) resource of new RAT using the fact that, when a new RAT UE is simultaneously connected to a new RAT BS and an LTE BS (i.e., dual connectivity), timing advances (TAs) to the respective BSs are different. For convenience of description, although the present disclosure is described focusing on a dual connected UE, the present disclosure does not exclude a UE used for other scenarios. For example, the present disclosure is also applicable even when an NR UE uses an LTE band as supplemental UL. The present disclosure is also applicable to all combinations using a corresponding band combination of NR carrier aggregation (CA), etc.

In Rel-15 new RAT (NR), coexistence of LTE and NR is under discussion. One considered scenario is dual connectivity. This means that a UE is simultaneously connected to NR and LTE to transmit and receive signals to and from both an NR BS and an LTE BS. In this case, according to a band combination, LTE UL and NR UL may cause LTE DL to be subjected to intermodulation distortion (IMD) or LTE UL may cause NR DL to be subjected to harmonic interference.

For example, it is assumed that a band combination of LTE CA and NR CA uses 4 DL component carriers (CCs)/1 DLCC (B1, 3, 7, 20) of LTE and 1 DL CC/1 ULCC (3.4 to 3.8 GHz) of NR. Here, in the case of simultaneous transmission of LTE UL and NR UL, second harmonic of UL (1710 to 1785 MHz) of LTE band 3 and fifth IMD generated by NR UL (3.3 to 3.8 GHz) may affect DL (2620 to 2690 MHz) of LTE band 7, thereby resulting in poor DL performance. Alternatively, second harmonic of UL (1710 to 1785 MHz) of LTE band 3 may affect NR DL (3.3 to 3.8 GHz), thereby deteriorating DL performance.

In the present disclosure, although a description is given using LTE DL, LTE UL, NR DL, and NR UL, those expressions may be changed to DL of band X, UL of band Y, DL of band Z, and UL of band K, respectively. Then, the present disclosure is applicable to scenarios other than dual connectivity. For example, the present disclosure is applicable to the case in which an LTE band is used as supplemental UL. The present disclosure is also applicable to all combinations using a corresponding band combination such as NR CA. The bands X, Y, Z, and K may mean bands, some of which are the same.

Therefore, in a current discussion about coexistence of LTE and NR, an operation in which a UE is not allowed to simultaneously transmit LTE UL and NR UL or the UE does not need to simultaneously transmit and receive LTE UL and NR DL is considered. To this end, a method of causing the UE to transmit an LTE UL signal in a partial time duration and receive or transmit an NR DL or NR UL signal in the remaining time duration is considered.

If a dynamic scheduling message may be shared between LTE and NR BSs, the above-mentioned method may be realized by adjusting scheduling between the LTE and NR BSs. However, if it is difficult to share dynamic scheduling information in real time by assuming a situation in which a message is exchanged through an X2 interface between LTE and NR, it is necessary to semi-statically separate a time duration for LTE UL signal transmission and a time duration for NR DL reception or NR UL signal transmission. However, even when the LTE and NR BSs dynamically share scheduling information, it may be necessary to allow effective scheduling in consideration of different NR and LTE frame structures.

### <First example useful for understanding the invention>

Even when the time duration of LTE UL and the time duration of NR UL or NR DL are semi-statically separated, one characteristic is that there is a time duration in which signals assumed to be separated from the viewpoint of the UE overlap occurs due to TA to the LTE BS and TA to the NR BS or propagation delay in the LTE BS.

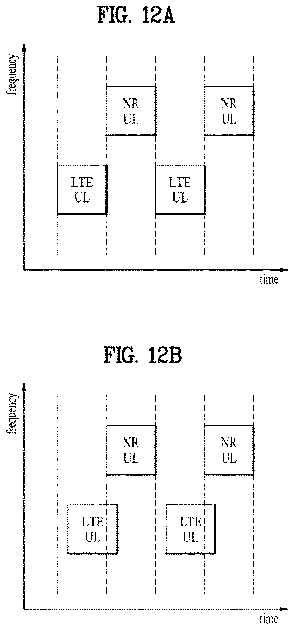

FIG. 12 is a reference diagram for explaining a scenario that may occur when LTE UL and NR UL are separated in a time duration. In FIG. 12, it is assumed that dotted lines indicate a UL slot/subframe boundary based on transmission of a long TA.

Even if LTE UL and NR UL are separated in a time duration as illustrated in FIG. 12A, when an LTE TA is shorter than an NR TA, an LTE UL signal is transmitted later than an NR UL signal by a TA difference as illustrated in FIG. 12B, so that a phenomenon in which the LTE UL signal and the NR UL signal are simultaneously transmitted from the viewpoint of the UE occurs.

Therefore, in order to solve the above problem, the first example proposes the following method.

In a time duration in which LTE UL and NR UL should be simultaneously transmitted due to a difference between TA values, the NR signal is not transmitted. That is, the time duration may be treated as a reserved resource configured without explicit signaling from the viewpoint of the NR signal (e.g., it is assumed that the UE punctures transmission in the corresponding duration). Alternatively, the TA values of two carrier groups (CGs) of the UE are reported to a network, and the network may semi-statically configure a reserved resource corresponding to a difference between the TA values or dynamically configure an unused resource by adjusting a starting symbol for PUSCH/PUCCH transmission or an ending symbol for PUSCH/PUCCH transmission.

If the corresponding duration is larger than one scheduled channel (e.g., short PUCCH), the corresponding channel may be dropped. Accordingly, in order to prevent such unnecessary channel drop, it may be assumed that the UE periodically reports a difference between the TA values of respective CGs or a TA value per CG to a gNB (NR BS). Alternatively, it may be assumed that the UE performs transmission regardless of a simultaneous transmission duration and only the gNB punctures this duration and receives a signal.

This first example aims to maintain the existing performance of LTE while slightly reducing NR UL transmission. However, even when the LTE signal and the NR signal overlap in a time duration, if the time duration is short, the LTE signal and the NR signal may not be greatly affected by interference. Accordingly, when the length of an overlapping time duration is short, simultaneous transmission of LTE UL and NR UL may be possible. Here, the length of the overlapping time duration may be determined according to a TA difference. Hereinafter, the first example will be described based on methods 1-A to 1-D.

1-A. If the overlapping time duration is short, NR UL and LTE UL are simultaneously transmitted.

The length of the overlapping time duration is determined by the TA difference. The TA difference or an LTE TA and an NR TA are indicated to the UE. Information about the LTE TA and the NR TA may be indicated by the LTE BS and the NR BS to the UE so as to exchange the information between LTE and NR higher ends of the UE or may be indicated by the NR BS to the UE.

Alternatively, the UE indicates the TA difference or the LTE TA and the NR TA to the LTE/NRBS.

A threshold value of the TA difference, which is a criterion in determining that a time duration in which NR UL and LTE UL may be simultaneously transmitted is short, may be indicated by the NR BS to the UE through higher layer signaling (e.g., RRC signaling) or may be predefined. This overlapping duration may be differently configured according to a numerology used or may be configured based on OFDM symbol duration (e.g., X% of symbols) corresponding to each numerology used (e.g., based on a larger one of two subcarrier spacings).

1-B. A time length during which NR UL is not transmitted due to the overlapping time duration may be defined in units of OFDM (or DFT-s-OFDM) symbols or slots.

For example, when the time length during is defined in units of symbols, even if the TA difference is less than one symbol, transmission may not be performed in one symbol. Alternatively, even if the TA difference is a value between one symbol and two symbols, transmission may not be performed in two symbols. It is assumed that the length of related symbols follows the numerology of UL (e.g., PUCCH/PUSCH) used by NR. If multiple numerologies are supported, the number of unused symbols per numerology may be differently defined. This is because signal transmission is performed not in units of symbols when an NR UL signal is not transmitted during a duration corresponding to the TA difference or when a signal is not transmitted regardless of a symbol length, so that only an error may occur during signal demodulation.

The time length may be defined in units of slots (i.e., one channel is transmitted in one or multiple slots) because a lot of errors may occur when a message is transmitted by skipping a few symbols in the case in which the NR BS operates resources in units of slots.

This overlapping duration may be differently configured according to a numerology used or may be configured based on an OFDM symbol duration (e.g., X% of symbols) corresponding to each numerology used (e.g., based on a larger one of two subcarrier spacings).

For example, when the time length is defined in units of symbols or slots, the NR UL signal may not be transmitted as much as N times a symbol or a slot if the overlapping duration is shorter than N times a symbol or a slot and longer than N-1 times a symbol or a slot. This serves to protect signal transmission from interference as much as possible.

As another example, when the time length is defined in units of symbols or slots, the NR UL signal may not be transmitted as much as N-1 times a symbol or a slot if the overlapping duration is shorter than N times a symbol or a slot and longer than N-1 times a symbol or a slot. This serves to transmit the NR UL signal as much as possible because, although there is a partial simultaneous transmission duration of LTE UL and NR UL, it is determined that interference does not greatly affect transmission.

As another example, when the time length is defined in units of symbols or slots, whether not to transmit the NR UL signal as much as N-1 times a symbol or a slot or as much as N times a symbol or a slot in the case in which the overlapping duration is shorter than N times a symbol or a slot and longer than N-1 times a symbol or a slot may be determined according to the TA difference. Alternatively, one of the two operations may be configured through higher layer signaling (e.g., RRC signaling). That is, when a length obtained by subtracting N-1 times a symbol or a slot from the overlapping duration is less than a predetermined threshold, the NR UL signal may not be transmitted by N-1 times a symbol or a slot. When the length obtained by subtracting N-1 times a symbol or a slot from the overlapping duration is greater than the threshold, the NR UL signal may not be transmitted by N times a symbol or a slot. This serves to transmit the NR UL signal as much as possible because it is determined that interference does not greatly affect transmission when a simultaneous transmission duration of NR UL and LTE UL is short except for a region defined not to transmit the NR UL signal. Here, the threshold may be indicated by the NR BS to the UE through higher layer signaling (e.g., RRC signaling) or may be predefined.

As another example, a time duration in which overlapping transmission is allowed may be predefined and this time duration may be excluded from the overlapping duration. Then, the method of 1-B may be applied to the remaining overlapping duration. This is because interference may not greatly affect transmission even when LTE UL and NR UL are simultaneously transmitted.

Alternatively, a time duration (or symbols or slots) in which NR UL is not transmitted according to the TA difference may be predefined or may be indicated through higher layer signaling (e.g., RRC signaling).

1-C. In the first example, the BS may inform the UE that the same TA value should be intentionally used. In this case, for example, the BS may inform the UE of an NR TA which is the same as an LTE TA or cause the UE to assume that the NR TA is equal to the LTE TA. Alternatively, the BS may inform the UE of the LTE TA which is the same as the NR TA or cause the UE to assume that the LTE TA is equal to the NR TA. Alternatively, a plurality of NR TA values or LTE TA values rather than one NR TA value or one LTE TA value may be configured. The method of 1-C may be used only to apply a slot boundary of NR UL or LTE UL, which may be separately operated from a slot boundary of NR DL or LTE DL.

When a plurality of LTE TAs or NR TAs is configured, one basic TA may be configured. A basic slot boundary is recognized such that NR UL operates in association with a basic NR TA and LTE UL operates in association with a basic LTE TA. However, i) the NR TA and the LTE TA which are set to be equal may be semi-statically indicated through higher layer signaling (or RRC signaling) or a media access control (MAC) channel element (CE) or may be dynamically indicated through a control channel. Alternatively, the slot boundary may be predefined to assume that the LTE TA and the NR TA are equal. In addition, ii) the NR TA set to a value different from the basic NR TA and the LTE TA set to a value different from the basic LTE TA may be semi-statically indicated through higher layer signaling (or RRC signaling) or the MAC CE or may be dynamically indicated through the control channel. Alternatively, the slot boundary may be predefined to assume that the NR TA is set to a specific value different from the basic NR TA and the LTE TA is set to a specific value different from the basic LTE TA. That is, the LTE TA and the NR TA may be predefined to be equal only with respect to a UE performing a dual connectivity operation.

If the NR TA and the LTE TA are indicated through higher layer signaling (e.g., RRC signaling) or the MAC CE, from when or until when a new TA value is assumed starting from a configured timing may be predefined or configured.

If the NR TA and the LTE TA are indicated through the control channel, from when or until when after the control channel the new TA value is assumed may be predefined or configured or may be indicated together through the control channel.

If the NR TA and the LTE TA are indicated through higher layer signaling (e.g., RRC signaling), the MAC CE, or the control channel, a basic TA may be defined to be used during an ambiguous time (when signaling is missed or until configuration is confirmed).

In addition, sets of subframes/slots to which different TAs are applied may be different. This serves to optimize different operations by applying different TAs to subsets of slots, in consideration of the case in which TAs are used to adjust arrival of a UL/DL RS in addition to a related operation.

In 1-C, since different TAs are intentionally used, subcarrier interference may occur between UEs in FDM with different UEs of LTE and NR. Therefore, the above operation may be limitedly used by the UE only when the UE is subjected to FDM not to use UL. In this case, since the UE may not know whether to perform UL transmission after FDM, this operation may be enabled only when the UE transmits UL in a full band.

1-D. The first example is applicable to both the case in which the LTE TA is shorter than the NR TA and the case in which the LTE TA is longer than the NR TA.

**<Second example useful for understanding the invention>**

The first example has been described under the assumption that LTE UL and NR UL are simultaneously transmitted on the time axis. Alternatively, the first example has described the case in which TDM should be applied to LTE UL and NR UL. Even when it is assumed that LTE UL and NR DL are simultaneously transmitted on the time axis or when LTE UL and NR DL are not simultaneously transmitted (i.e., half-duplex between LTE UL and NR DL) due to harmonics etc., the second example may be similarly performed as follows. In this case, usually, simultaneous transmission and reception is not performed in an NR DL TTI after a TTI in which LTE UL is transmitted.

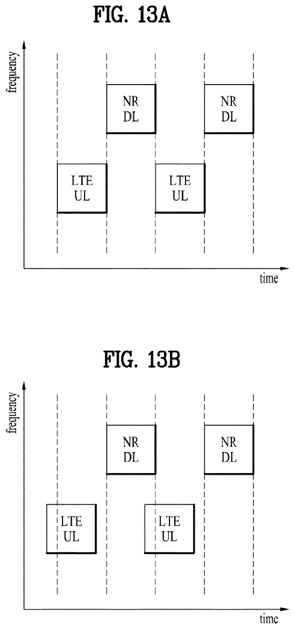

FIG. 13 is a reference diagram for explaining a second example of the present disclosure.

In FIG. 13 (a), assuming that TDM is performed based on a subframe between LTE UL and NR DL similarly to the first example, if NR DL is transmitted in subframe n+1 after subframe n in which LTE UL is transmitted, there may be no an overlap phenomenon between UL and DL in subframe n. This is usually because a system is designed such that a DL timing is later than a UL timing. On the contrary, simultaneous transmission and reception may be performed in a TTI in which LTE UL is transmitted after a TTI in which NR DL is transmitted. This phenomenon always occurs unless an LTE UL TA and an NR UL TA are '0'. As illustrated in FIG. 13B, a time duration in which simultaneous transmission and reception corresponding to the LTE UL TA is performed occurs.

When LTE UL and NR DL simultaneously occur, it is considered that NR DL transmission is not performed, the UE is not allowed to perform DL reception, or a modulation and coding scheme (MCS) is lowered during transmission on a related resource. More characteristically, when NR DL and LTE UL overlap or when UL/DL does not simultaneously occur due to a harmonics issue, measurement (e.g., beam management, CSI measurement, RRM measurement, or RLM measurement) etc. is not performed on a related resource. Although a network may schedule data, the UE may not receive the data or, even when the UE receives the data, demodulation performance on a corresponding slot/resource may be undefined or may be relaxed as compared with performance on other resources.

Therefore, in the second example, the UE assumes that an NR signal is not transmitted in a time duration in which LTE UL and NR DL should be simultaneously transmitted and received due to the LTE TA. That is, the time duration may be treated as a reserved resource configured without explicit signaling from the viewpoint of the NR signal (e.g., it is assumed that the NR BS punctures transmission in the corresponding duration). Alternatively, the TA values of two CGs of the UE are reported to the network, and the network may semi-statically configure a reserved resource corresponding to a difference between the TA values or dynamically configure an unused resource by adjusting a starting symbol for PDSCH/PDCCH transmission or an ending symbol for PDSCH/PDCCH transmission. If the corresponding duration is larger than one scheduled channel (e.g., short PDCCH), the corresponding channel may be dropped. Accordingly, in order to prevent such unnecessary channel drop, it may be assumed that the UE periodically reports a difference between the TA values of respective CGs or a TA value per CG to the gNB (NR BS). Alternatively, it may be assumed that the BS performs transmission regardless of a simultaneous transmission duration and only the UE punctures this duration and receives a signal. This aims to maintain the existing performance of LTE while slightly reducing NR DL transmission.

However, even when the LTE signal and the NR signal overlap in a time duration, if the time duration is short, the LTE signal and the NR signal may not be greatly affected by interference. Accordingly, when the length of an overlapping time duration is short, simultaneous transmission of LTE UL and NR UL may be possible. Here, the length of the overlapping time duration may be determined according to the LTE TA. Hereinafter, the second example will be described based on methods 2-A to 2-C.

2-A. If the LTE TA is short, it is assumed that NR DL and LTE UL may be simultaneously transmitted and received.

The length of the overlapping time duration is determined by the LTE TA. The LTE TA is indicated to the UE. Information about the LTE TA is indicated by the LTE BS so as to exchange the information between higher ends of the UE or may be indicated by the NR BS to the UE.

Alternatively, the UE indicates the TA difference or the LTE TA and the NR TA to the LTE/NRBS.

In addition, a threshold value of the LTE TA, which is a criterion in determining that a time duration in which NR DL and LTE UL are simultaneously transmitted and received is short, may be indicated by the NR BS to the UE through higher layer signaling (e.g., RRC signaling) or may be predefined.

2-B. A time length during which it is assumed that NR DL is not received due to the overlapping time duration may be defined in units of OFDM (or DFT-s-OFDM) symbols or slots. For example, when the time length is defined in units of symbols, even if the LTE TA is less than one symbol, it may be assumed that reception is not performed in one symbol. Alternatively, even if the LTE TA is a value between one symbol and two symbols, it may be assumed that reception is not performed in two symbols. It is assumed that the length of related symbols follows the numerology of DL (e.g., PDCCH/PDSCH) used by NR. If multiple numerologies are supported, the number of unused symbols per numerology may be differently defined. This is because signal transmission is performed not in units of symbols when an NR DL signal is not received during a duration corresponding to the LTE TA or when a signal is not transmitted regardless of the length of symbols, so that only an error may occur during signal demodulation. The time length may be defined in units of slots (i.e., one channel is transmitted in one or multiple slots) because a lot of errors may occur when a message is transmitted by skipping a few symbols in the case in which the NR BS operates resources in units of slots.

This overlapping duration may be differently configured according to a numerology used or may be configured based on an OFDM symbol duration (e.g., X% of symbols) corresponding to each numerology used (e.g., based on a larger one of two subcarrier spacings).

When the time length is operated in units of symbols or slots, the NR DL signal may not be received as much as N times a symbol or a slot if the overlapping duration is shorter than N times a symbol or a slot and longer than N-1 times a symbol or a slot. This serves to protect signal transmission from interference as much as possible.

Alternatively, when the time length is operated in units of symbols or slots, the NR DL signal may not be received as much as N-1 times a symbol or a slot if the overlapping duration is shorter than N times a symbol or a slot and longer than N-1 times a symbol or a slot. This serves to receive the NR DL signal as much as possible because, although there is a partial simultaneous transmission duration of LTE UL and NR DL, it is determined that interference does not greatly affect transmission.

Alternatively, when the time length is operated in units of symbols or slots, whether not to receive the NR DL signal as much as N-1 times a symbol or a slot or as much as N times a symbol or a slot in the case in which the overlapping duration is shorter than N times a symbol or a slot and longer than N-1 times a symbol or a slot may be determined according to the LTE TA. Alternatively, one of the two operations may be configured through higher layer signaling (e.g., RRC signaling).

When a length obtained by subtracting N-1 times a symbol or a slot from the overlapping duration is less than a predetermined threshold, the NR DL signal may not be received by N-1 times a symbol or a slot. When the length obtained by subtracting N-1 times a symbol or a slot from the overlapping duration is greater than the threshold, the NR DL signal may not be received by N times a symbol or a slot. This serves to receive the NR DL signal as much as possible because it is determined that interference does not greatly affect transmission when a simultaneous transmission and reception duration of NR DL and LTE UL is short except for a region defined not to receive the NR DL signal. Here, the threshold may be indicated by the NR BS to the UE through higher layer signaling (e.g., RRC signaling) or may be predefined.

Alternatively, a time duration in which overlapping transmission is allowed may be predefined and this time duration may be excluded from the overlapping duration. Then, the methods of the second example may be applied to the remaining overlapping duration. This is because interference may not greatly affect transmission even when LTE UL and NR DL are simultaneously transmitted and received.

Furthermore, a time duration (or symbols or slots) in which NR UL is not transmitted according to the LTE TA may be predefined or may be indicated through higher layer signaling (e.g., RRC signaling).

2-C. In the second example, the BS may inform the UE that the LTE TA value of zero or a specific value should be intentionally used.

The method of 2-C may be used only to apply a slot boundary of LTE UL, which may be separately operated from a slot boundary of LTE DL. When a plurality of LTE TAs is configured, one basic TA may be configured. A basic slot boundary is recognized such that LTE UL operates in association with a basic LTE TA. However, i) the LTE TA set to a zero value may be semi-statically indicated through higher layer signaling (or RRC signaling) or a MAC CE or may be dynamically indicated through a control channel. Alternatively, for this slot boundary, the LTE TA may be predefined to assume that the LTE TA is a zero value. In addition, ii) the LTE TA set to a value different from the basic LTE TA may be semi-statically indicated through higher layer signaling (or RRC signaling) or the MAC CE or may be dynamically indicated through the control channel. Alternatively, for this slot boundary, the LTE TA may be predefined to assume that the LTE TA is set to a value different from the basic LTE TA. Alternatively, iii) a time for a UL/DL switching time of the BS, set to the LTE TA value, may be semi-statically indicated through higher layer signaling (or RRC signaling) or the MAC CE or may be dynamically indicated through the control channel. Alternatively, for this slot boundary, the time for a UL/DL switching time of the BS may be defined to assume that the time is set to the LTE TA value. Furthermore, the LTE TA may be predefined to be zero only with respect to a UE performing a dual connectivity operation.

If the LTE TA is indicated through higher layer signaling (e.g., RRC signaling) or the MAC CE, from when or until when a new TA value is assumed starting from a configured timing may be predefined or configured.

If the LTE TA is indicated through the control channel, from when or until when the new TA value is assumed after the control channel may be predefined or configured or may be indicated together through the control channel.

If the LTE TA is indicated through higher layer signaling (e.g., RRC signaling), the MAC CE, or the control channel, a basic TA may be defined to be used during an ambiguous time (when signaling is missed or until configuration is confirmed).

In 2-C, since a different TA is intentionally used, subcarrier interference may occur between UEs in FDM with different UEs of LTE. Therefore, the above operation may be limitedly used by the UE only when the UE is subjected to FDM not to use UL. In this case, since the UE may not know whether to perform UL transmission after FDM, this operation may be enabled only when the UE transmits UL in a full band.

Further, the second example may be performed regardless of the TA difference of LTE TA and NR TA.

Although, in the second example, the UE assumes that the NR signal is not transmitted during a time duration in which the UE needs to simultaneously transmit and receive LTE UL and NR DL due to the LTE TA, the BS may not actually transmit any DL signals. Such an example may be PDCCH or PDSCH transmission for the UE.

### <Third Example>

The present disclosure may consider that LTE frequency and NR frequency are changed (interference of NR UL affects LTE UL/DL). In this case, a method of dropping NR UL, similarly to the first example, rather than dropping LTE DL, may be considered in order to protect LTE.

Although a simultaneous transmission duration may occur according to a TA, a time gap, corresponding to a TA difference or an LTE TA, during which all of NR UL/DL and LTE UL are not transmitted and received, may occur as illustrated in FIG. 12B or FIG. 13B.

Therefore, the third example proposes the following methods.

In a time duration during which all of NR UL/DL and LTE UL are not transmitted and received due to the TA difference or the LTE TA, NR UL is transmitted or NR DL is received.

3-A. When a time gap is short, the UE assumes that both NR UL and NR DL are not performed (transmission and reception puncturing is possible). This is because, if UL of one symbol is transmitted or DL of one symbol is received in the case in which the time gap is shorter than one OFDM (DFT-s-OFDM) symbol, a simultaneous transmission and reception duration of NR UL and NR DL occurs and then transmission and reception may be affected by interference of LTE UL.

Here, the length of the time gap is determined as the TA difference or the LTE TA.

For example, the TA difference or the LTE TA and NR TA are indicated to the UE. Information about the LTE TA and the NR TA is indicated to the UE by the LTE BS and the NR BS, respectively, so as to exchange the information between LTE and NR higher ends of the UE or may be indicated by the NR BS to the UE.

Alternatively, the UE indicates the TA difference or the LTE TA and the NR TA to the LTE/NRBS.

Alternatively, a threshold value of the TA difference or the LTE TA, which is a criterion in determining that the time gap is short, may be indicated by the NR BS to the UE through higher layer signaling (e.g., RRC signaling) or may be predefined.

2-B. A time length during which it is assumed that NR UL/DL transmission/reception is performed according to the length of the time gap may be defined in units of OFDM (or DFT-s-OFDM) symbols or slots. For example, when the time length is defined in units of symbols, even if the TA difference or the LTE TA is less than one symbol, it may be assumed that one symbol is used for NR UL/DL. Alternatively, even if the TA difference or the LTE TA is a value between one symbol and two symbols, it may be assumed that one symbol is used for NR UL/DL. This is because signal transmission is performed regardless of the length of symbols when NR UL/DL transmission/reception is performed during a duration corresponding to the TA difference or the LTE TA, so that only an error may occur during signal demodulation through signal transmission not in units of symbols.

The time length may be defined in units of slots (i.e., one channel is transmitted in one or multiple slots) because a lot of errors may occur when a message is transmitted by skipping a few symbols in the case in which the NR BS manages resources in units of slots.

This time gap may be differently configured according to a numerology used or may be configured based on an OFDM symbol duration (e.g., X% of symbols) corresponding to each numerology used (e.g., based on a larger one of two subcarrier spacings).

For example, when the time length is operated in units of symbols or slots, it may be assumed that NR UL/DL transmission/reception is performed as much as N-1 times a symbol or a slot if the time gap is shorter than N times a symbol or a slot and longer than N-1 times a symbol or a slot. This serves to protect signal transmission from interference as much as possible.

Alternatively, when the time length is operated in units of symbols or slots, it may be assumed that NR UL/DL transmission/reception is performed as much as N times a symbol or a slot if the time gap is shorter than N times a symbol or a slot and longer than N-1 times a symbol or a slot. This serves to receive the NR DL signal as much as possible because, although there is a partial simultaneous transmission/reception duration of LTE UL and NR UL/DL, it is determined that interference does not greatly affect transmission.

Alternatively, when the time length is operated in units of symbols or slots, whether it is assumed that NR UL/DL transmission/reception is performed as much as N-1 times a symbol or a slot or as much as N times a symbol or a slot in the case in which the time gap is shorter than N times a symbol or a slot and longer than N-1 times a symbol or a slot may be determined according to the TA difference or the LTE TA. Alternatively, one of the two operations may be configured through higher layer signaling (e.g., RRC signaling). For example, when a length obtained by subtracting N-1 times a symbol or a slot from the time gap is less than a predetermined threshold, it is assumed that NR UL/DL signal transmission/reception is performed by N-1 times a symbol or a slot. When the above length is greater than the threshold, it is assumed that NR UL/DL signal transmission/reception is performed by N times a symbol or a slot. This serves to transmit and receive the NR UL/DL signal as much as possible because it is determined that interference does not greatly affect transmission and reception when a simultaneous transmission/reception duration of NR UL/DL and LTE UL is short. Further, the threshold may be indicated by the NR BS to the UE through higher layer signaling (e.g., RRC signaling) or may be predefined.

In this case, a time length during which overlapping transmission and reception may be performed may be predefined and the methods of the third example may be applied to a region obtained by adding this time length to the time gap. This is because interference may not greatly affect transmission and reception even if simultaneous transmission and reception is performed during a time duration in which LTE UL and NR UL/DL are simultaneously transmitted and received.

Furthermore, a time duration (or symbols or slots) in which NR UL/DL is transmitted according to the TA difference or the LTE TA may be predefined or may be indicated through higher layer signaling (e.g., RRC signaling).

While the first to third examples have independently described the duration in which simultaneous transmission and reception of LTE and NR is performed and the time gap in which transmission and reception of both NR and LTE is not performed, the duration and the time gap may be consecutively used. Referring to FIG. 12A, after the simultaneous transmission and reception duration of LTE and NR, the time gap in which both LTE and NR are not transmitted and received appear. Therefore, NR may not be transmitted during the simultaneous transmission and reception duration and a signal which has not been transmitted may be transmitted in the subsequent time gap. This serves to flexibly perform UL/DL transmission and reception indicated through the control channel from the perspective of NR UL/DL control.

### < **Embodiment**>

The UE assumes that transmission and reception to be performed in a region (T1) in which it is assumed that NR UL/DL transmission/reception is not performed due to an overlapping duration with LTE UL transmission on the time axis is performed in a time gap (region T2) after the region T1. In actuality, the BS performs transmission in the region T2. It is assumed that a control message for transmission in the region T1 is applied to the region T2.

4-A. For example, if a PDSCH has been transmitted prior to the region T1 and transmission thereof should be ended in the region T1 but is not ended, the UE assumes that the signal is continuously transmitted in the region T2. Actually, the BS transmits the signal in the region T2.

4-B. For example, if a PUSCH or a PUCCH has been transmitted prior to the region T1 and transmission thereof should be ended in the region T1 but is not ended, the UE continuously transmits the signal in the region T2.

4-C. Whether to apply the embodiment may be indicated by the NR BS to the UE through higher layer signaling (e.g., RRC signaling), may be indicated through a control channel, or may be predefined. Alternatively, whether to apply the embodiment may be determined according a band combination.

4-D. In the embodiment, operation in the region T1 may conform to the rule of the first or second embodiment and operation in the region T2 may conform to the rule of the third embodiment. In this case, which method of the first to third examples will be used may be predefined, may be indicated by the BS to the UE through higher layer signaling (e.g., RRC signaling), or may be indicated through the control channel.

Although not described in the first to third examples, the regions T1 and T2 may be operated as length other than a symbol or slot unit. This is because the length of the region T1 and the length of T2 are basically equal. For example, the regions T1 and T2 are one symbol and two symbols, DL that is not received in the region T1 may be received in the subsequent region T2 or UL that is not transmitted in the region T1 may be transmitted in the subsequent region T2, so that a signal may be recovered in time even not in a symbol unit. In the case of FDM with another UE, an interference issue may occur. However, if it is assumed that LTE UL will create interference with respect to all UEs and thus if all UEs perform transmission in units of T1 and T2 rather than in symbols or slots as in the method of 4-D, there may be no problem even in FDM.

4-E. The region T1 and the region T2 may have different lengths. For example, the region T1 may be 2 symbols and the region T2 may be one symbol (according to the above-described first to third examples). In this case, the UE may assume that PDSCH transmission is ended in one symbol of the region T1 and a signal of one symbol that is not transmitted in the region T1 is transmitted in one symbol of the region T2. In this case, the UE may assume that the last part in one slot is the length of the region T2 rather than the length of the region T1. This is because, in operation of a slot unit, a symbol of a slot in which DL or UL transmission is ended may not be indicated and transmission until the last part of a slot may be indicated.

4-F. When the region T2 overlaps with a part in which the control channel is transmitted, it may be assumed that the control channel is not transmitted. For example, if the control channel transmitted in two symbols and the region T2 is composed of two symbols so that the control channel equally overlaps with the region of T2, it may be assumed that a signal that should be transmitted and received in the region T1 is not transmitted and received in the region T2. This may be basically solved if the BS operates a transmission region such that signal transmission is not performed in the region T1.

4-G. G. The region T2 in which transmission and reception is performed after the region T1 may be predefined, may be indicated by the BS to the UE through higher layer signaling (e.g., RRC signaling), or may be indicated through the control channel.

4-H. When the regions T1 and T2 are longer than a predetermined time value (because LTE UL is consecutively configured), the fourth may be defined not to be applied. A threshold time (e.g., a symbol, a slot, a subframe, or a TTI), which is a criterion in determining whether the regions T1 and T2 are longer than the predetermined time value, may be indicated by the BS to the UE through higher layer signaling (e.g., RRC signaling) or may be indicated though the control channel.

4-I. The arrangement of a reference signal (RS) in the region T2 may conform to the arrangement of an RS of mini-slot transmission. This is because estimation performance may be degraded when the RS in the region T2 is not used for channel estimation together with an RS which is transmitted prior to the region T1 and thus the RS in the region T2 is independently used.

4-J. Whether to use or not an RS prior to the region T1 and an RS of the region T2 by a joint scheme (e.g., time interpolation) during channel estimation may be predefined, may be indicated by the BS to the UE through higher layer signaling (e.g., RRC signaling), or may be indicated through the control channel. Alternatively, whether to use the RSs by a joint scheme (e.g., time interpolation) during channel estimation according to length between the region T1 and the region T2 may be defined. The value of the length corresponding to a threshold may be predefined, may be indicated by the BS to the UE through higher layer signaling (e.g., RRC signaling), or may be indicated through the control channel.

4-K. A slot type of the region T1 may be applied to the region T2. In this case, as illustrated in FIG. 13B, the region T2 may have difficulty in receiving the control channel. Therefore, whether to apply the slot type of the region T1 to the region T2 may be predefined, may be indicated by the BS to the UE through higher layer signaling (e.g., RRC signaling), or may be indicated through the control channel.

4-L. A subframe having the region T1 may be shifted by the region T1 and then may be used as a new subframe. In this case, if the subframe is shifted in units of symbols, although an overlapping time in the region T1 disappears, a new overlapping time may occur in the first or last symbol of the subframe. The new overlapping time duration may be used through rate matching or it may be assumed that a subframe is not present. Whether this new duration may be i) rate-mated or ii) included in a subframe may be differently operated in units of symbols.

### <Fifth example>

According to the fifth example of the present disclosure, the above-described time gap may be used only for mini-slot transmission. That is, the UE may assume that monitoring of a mini-slot may be performed only in the time gap.

Here, the time gap may conform to configuration related to the third example.

The UE may assume that mini-slot monitoring is performed only in partial time gaps among multiple time gaps. A relationship between time gaps for such mini-slot transmission may be predefined, may be indicated by the BS to the UE through higher layer signaling (e.g., RRC signaling), or may be indicated through the control channel.

In this case, since the time gap has ambiguity of transmission, the UE may assume that mini-slot transmission is not performed in this time gap.

Using a difference between time gaps and a difference between NR and LTE frame structures, UL-UL TDM or UL-DL TDM may be more effectively performed.

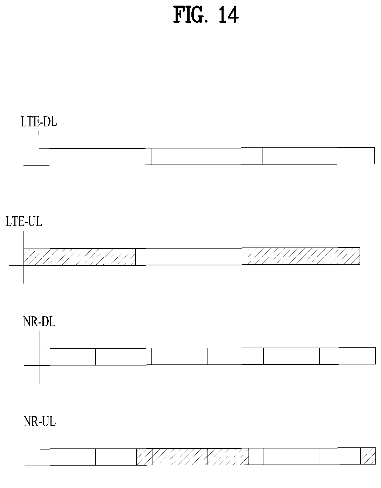

FIG. 14 is a reference diagram for explaining a difference between time gaps and a difference between NR and LTE frame structures according to the present disclosure. For example, when a difference between an LTE TA and an NR TA is about at least two OFDM symbols in an NR UL frame structure, i.e., when NR UL and LTE UL are sequentially subjected to TDM, PUCCH transmission may be performed in the second, third, and fourth slots from the viewpoint of NR UL, which is the same in terms of all UL resources but is reduced in latency from DL to UL. Therefore, this is desirable upon performing self-contained or fast HARQ-ACK feedback.

To this end, a network may intentionally set a TA for LTE-UL to be a large value. As a similar method, a frame boundary of NR UL may be adjusted. For example, the frame boundary may be adjusted such that NR UL is transmitted after two OFDM symbols (relative to a DL frame boundary) or a PUCCH resource is allocated to as many slots as possible according to a timing difference of LTE and NR.

This method of adjusting the frame or slot boundary may be applied to the method 1-C of the first example or the method 2-C of the second example. Then, successive slot or frame boundaries of UL may be defined to be successively applied.

When LTE UL and NR UL are semi-statically subjected to TDM, an RACH resource of RACH resource configuration may always not be included in a resource duration of LTE UL. In this case, the following methods 5-A) to 5-E) may be considered.

5-A) The UE may transmit an RACH only when there are a TDMed LTE UL duration and an RACH resource.

5-B) The RACH resource may be separately configured for the UE using TDMed LTE UL so that the RACH resource may be included only in TDMed LTE UL.

5-C) RACH transmission may be performed even when the RACH resource is not present in a TDMed LTE UL duration. In this case, the LTE BS informs the NR BS of an LTE RACH resource. Alternatively, when an LTE RACH and NR UL transmission overlap in time, the UE may cause the LTE RACH to be transmitted in the next RACH time.

If RACH transmission fails although an attempt to transmit the RACH is made by a predetermined number of times or more, the attempt to transmit the RACH is no longer made. Accordingly, in order to transmit the LTE RACH in the next RACH time when the LTE RACH and NR UL transmission overlap in time, the UE may not count the attempt to transmit the RACH performed by the predetermined number of times.

When the LTE RACH and NR UL transmission overlap in time, NR UL transmission may be dropped. That is, when the RACH is transmitted due to PDCCH order, since this is contention free, it may be more useful to drop NR UL transmission.

5-D) The above method may be equally applied to a scheduling request (SR) resource or a sounding reference signal (SRS) resource as well as the RACH resource. For example, in the case of the SRS resource, the above method may be applied only to an actually transmitted UE-specific SRS resource.

5-E) Whether to use some or all of the aforementioned methods 5-A) to 5-D) may be indicated by the BS to the UE through higher layer signaling (e.g., RRC signaling).

That is, in the case of the methods 5-A) to 5-E), when an LTE UL signal and an NR UL signal are to be simultaneously transmitted, the LTE UL signal or the NR UL signal may be dropped. This operation may determine whether to drop the LTE UL signal or the NR UL signal per resource on the time axis. This resource pattern may be semi-statically indicated to the UE through higher layer signaling (e.g. RRC layer signaling) and this operation may be specific to some signals. In particular, since the network is incapable of directly managing a transmission timing of non-scheduled data (e.g., an RACH, SR, or grant-free PUSCH), if transmission of such data overlaps in time, the data may be defined to be dropped.

For example, when LTE and NR are simultaneously transmitted on a resource configured as an LTE resource, in a situation in which an NR LTE PUSCH and an NR SR are to be simultaneously transmitted, the UE may transmit the NR SR on the next SR resource. In order for the UE to be aware of whether NR and LTE are simultaneously transmitted, scheduling information needs to be exchanged between NR and LTE modems from the perspective of the UE. Therefore, this operation may be performed only by available UEs according to UE capability. Even if scheduling information exchange is possible, in a situation in which the UE is aware that the LTE signal will be transmitted 1 ms later and transmits this information through the NR modem, it may take 2 ms to transmit the NR UL signal. Accordingly, when the UE performs such a drop operation, the UE may not transmit the LTE UL even if a resource within a time until scheduling information is transmitted from LTE to NR is an LTE resource.

In the case of the RACH, since the RACH is an important signal, a signal other than the RACH may be dropped during simultaneous transmission regardless of the LTE resource or the NR resource. In this case, the UE may exchange information that transmits the RACH thereof between NR and LTE. This requires an interface between the modems. If a time taken to exchange information is X, the UE should start this message exchange operation prior to X time or more starting from transmission of the RACH. In other words, the RACH may be defined not to be transmitted within X time.

The above-described operations assume that the scheduling information is exchanged between the LTE and NR modems. Therefore, the UE capability is divided according to whether the operation according to the fifth example is capable of being performed. If the operation is capable of being performed, the operation of the fifth example is performed and, if not, the NR signal may be dropped on the LTE resource and the LTE signal may be dropped on the NR resource.

The above-described operations of the fifth example do not necessarily assume that the scheduling information is exchanged between the LTE and NR modems. For example, whether transmission is performed may be indirectly known through power sharing. For example, in the case of power sharing in dual connectivity, semi-static power is divided between NR and LTE. If the semi-static power exceeds maximum power allowed by LTE, it is agreed that NR should reduce power. When LTE is transmitted at power above a maximum value, the above operation allows NR to be aware of this fact. This operation may be applied such that, when LTE power exceeds 0 other than a maximum value, it is possible to inform the NR modem of this fact. Therefore, the operations according to the fifth example may be performed through the above-described power sharing.

### <Sixth example>

According to the present disclosure, relatively few NR UL or DL resources may be used by semi-statically securing LTE UL resources. For example, even if the LTE UL resources require about two subframes per frame on average, in order to semi-statically secure the LTE UL resources, three subframes per frame may be allocated in every frame for LTE UL and NR UL or DL may be allocated only in the remaining subframes.

Therefore, in the following sixth example, it may be assumed that the UE transmits or receives an NR UL or DL signal at a time position of an LTE SRS resource in order to more secure NR UL or DL resources.

6-A) (All or a part of) unused resources among LTE SRS resources that are cell-specifically configured are indicated to the UE and it may be assumed that the UE may transmit or receive the NR UL or DL signal at a time location of the LTE SRS resource.

For example, such unused LTE SRS resources mean a time during which all of an LTE SRS is not transmitted in terms of time. As an example, it may be assumed that only some frequency resources in the entire LTE band are used as the LTE SRS resources in an area in which SRS transmission is performed.

As another example, such unused LTE SRS resources do not mean a time during which all of the LTE SRS is not transmitted in terms of time and may indicate which frequencies are used as the SRS or not used as the SRS. This is because whether SRS is used is accurately recognized for UL transmissions such as an LTE PUSCH and may be used for transmission based on priority between SRS transmission and other LTE UL transmission. Here, in a legacy LTE system, UEs have assumed that SRS transmission is performed on all cell-specifically configured SRS resources even if SRS transmission is not actually performed.

In addition, when NR UL and NR DL overlap in time on a UE-specific SRS resource, the UE may rate-match NR UL in the overlapping time or may assume that DL is not received.

6-B) It may be assumed that the LTE SRS resource secured by the NR UE is the time gap or the region T2 of the above-described third to fifth examples and the third to fifth examples may be applied to the LTE SRS resource.

### <Seventh example>

According to the above-described disclosure, the following scenario may be considered. For example, it is assumed that a band combination of LTE CA and NR CA uses 4 DL component carriers (CCs)/1 DL CC (B1, 3, 7, 20) of LTE and 1 DL CC/1 UL CC (3.4 to 3.8 GHz) of NR. Here, in the case of simultaneous transmission of LTE UL and NR UL, second harmonic of UL (1710 to 1785 MHz) of LTE band 3 and fifth IMD generated by NR UL (3.3 to 3.8 GHz) may affect DL (2620 to 2690 MHz) of LTE band 7, thereby resulting in poor DL performance. Alternatively, second harmonic of UL (1710 to 1785 MHz) of LTE band 3 may affect NR DL (3.3 to 3.8 GHz), thereby deteriorating DL performance.

In this case, simultaneous transmission of NR UL and LTE UL may cause interference on LTE DL and LTE UL transmission may cause interference on NR DL.

Accordingly, in the seventh example, methods 7-A) to 7-D) may be considered to simultaneously solve these interference problems.

7-A) LTE UL and NR UL/DL are separately used in time. Here, LTE DL may be used in the entire time.

When NR is TDD, NR UL and NR DL may be separately used dynamically.

When NR is TDD and LTE is FDD, LTE DL may be transmitted in the entire time. Therefore, PUSCH transmission caused by LTE scheduling and a UL timing for HARQ may desirably conform to a DL reference UL/DL configuration for an FDD Scell in LTE TDD-FDD CA corresponding to a TDD Pcell. NR UL/DL is transmitted in the remaining duration except for a transmission duration of LTE UL. This may be equally applied not only to PUSCH transmission caused by LTE scheduling and the UL timing for HARQ but also to other UL signals.

7-B) LTE UL and NR DL/LTE DL are separately used in time. In this case, NR UL may be used in the entire time.

When NR is TDD and LTE is FDD, LTE DL and LTE UL may be designed in the form of half duplex. Then, PUSCH transmission caused by LTE scheduling and the UL timing for HARQ may desirably conform to a TDD UL/DL configuration. NR UL/DL is transmitted in the remaining duration except for a transmission duration of LTE UL. This may be equally applied not only to PUSCH transmission caused by LTE scheduling and the UL timing for HARQ but also to other UL signals.

7-C) The above-described methods 7-A) and 7-B) may be selectively used according to whether LTE DL requires more resources or NR UL requires more resources. For example, when the method 7-A) is selected, if NR is TDD and LTE is FDD, PUSCH transmission caused by LTE scheduling and the UL timing for HARQ may automatically conform to a DL reference UL/DL configuration for an FDD SCell in LTE TDD-FDD CA corresponding to a TDD Pcell When the method 7-B) is selected, if NR is TDD and LTE is FDD, LTE DL and LTE UL may be designed in the form of half duplex and PUSCH transmission caused by LTE scheduling and the UL timing for HARQ may automatically conform to a TDD UL/DL configuration. The selected method of 7-C) may be configured for the UE by the LTE or NR BS through higher layer signaling (e.g., RRC signaling). If the selected method is configured by only one BS, LTE and NR higher ends of the UE may exchange information.

7-D) In the seventh example, whether the methods are applied by a band combination may be predefined or may be configured for the UE by the LTE or NR BS through higher layer signaling (e.g., RRC signaling). Whether the methods are applied by the band combination is configured by only one BS, LTE and NR higher ends of the UE may exchange information.

In the seventh example, when PUSCH transmission caused by LTE scheduling and the UL timing for HARQ are determined using a CA configuration or a TDD UL/DL configuration, all LTE UL timings are limited by the TDD UL/DL configuration. Therefore, for TDD UL/DL configuration 1 (i.e., DSUUDDSUUD), the UE may use subframe numbers 2, 3, 7, and 8 as UL subframes. However, such a TDD UL/DL configuration has only a very limited UL subframe set. Accordingly, even if UEs operate with respective different TDD UL/DL configurations, there is a problem in that UL subframes are not well distributed in terms of UEs. Particularly, subframe numbers 0 and 1 do not have UL in all TDD UL/DL configurations. To well distribute the UL subframes, each UE has a TDD UL/DL configuration and a subframe offset may be applied.

Accordingly, when a CA configuration or TDD UL/DL configuration is applied for a timing from LTE PDCCH to PUSCH transmission and a timing from PDSCH transmission for HARQ to ACK/NACK UL transmission, a reference TDD UL/DL configuration may be configured for the UE and a UL subframe offset (or together with modulo 10) may be configured.

For example, when subframe numbers 2, 3, 7, and 8 are UL subframes in TDD UL/DL configuration 1 and a subframe offset is 1, the UL subframe numbers are shifted by one so that a PUSCH timing and ACK/NACK timing therefor conform to a rule defined in the UL subframes 2, 3, 7, and 8 and actual subframes conform to UL subframes 1, 2, 6, and 7. If a subframe crosses a radio frame by the subframe offset, the subframe is cycled using modulo 10. For example, when, in UL subframe 2, subframe offset 3 is applied, an actual UL subframe becomes 9 by applying modulo 10.

In addition, since a subframe number is shifted by the UL subframe offset, there is a difference between an actual subframe number of a network and the subframe number by the subframe offset. Therefore, a slot or subframe index used for scrambling and sequence generation needs to use a previous value.

For example, during PUSCH and PUCCH transmission, a subframe index or a slot index needed to generate a scrambling value may use an actual subframe index or slot index to which the subframe offset is not applied.

As another example, during PUSCH and PUCCH transmission, a subframe index or a slot index needed to generate a sequence value or an RS sequence value may use an actual subframe index or a slot index to which the subframe offset is not applied.

When an offset is applied to a UL subframe, since there is a specification impact with a legacy standard specification in generating scrambling and sequence, the offset may not be applied to an actual UL subframe and the offset (together with modulo 10) may be applied only to locations of UL subframes for a scheduled PUSCH transmission timing and a HARQ ACK/NACK timing. In this case, a previous value to which the offset has not been applied is applied to the PUSCH and HARQ timings. For example, in TDD UL/DL configuration 1, subframe numbers 2, 3, 7, and 8 are UL subframes. If the subframe offset is 1, subframe numbers 3, 4, 8, and 9 become UL subframes and the PUSCH and ACK/NACK timings therefor conform to a rule defined in UL subframes 2, 3, 7, and 8 and the offset is applied for UL subframes 3, 4, 8, and 9.

Alternatively, if a UL subframe offset is applied together with a DL subframe offset in the seventh example, since a subframe number is shifted by the DL subframe offset, there is a difference between an actual subframe number of the network and the subframe number by the subframe offset. Therefore, during reception, a slot or subframe index used for scrambling and sequence generation for DL transmission is received by assuming a previous value.

For example, during PDSCH and PDCCH reception, it is assumed that a subframe index or slot index needed to generate a scrambling value has used an actual subframe index or slot index to which the subframe offset is not applied.

As another example, during PDSCH and PDCCH reception, it is assumed that a subframe index or slot index needed to generate a sequence value or an RS sequence value uses an actual subframe index or slot index to which a subframe offset is not applied.

Further, when a CA configuration or a TDD UL/DL configuration is used for a timing from LTE PDCCH to PUSCH transmission and a timing from PDSCH transmission for HARQ to AC/NACK UL transmission, a reference TDD UL DL configuration may be configured for the UE and additional UL subframes may further be configured. In this case, for example, a timing from this UL transmission and PDCCH or PDSCH transmission may be configured together, or a rule such as a corresponding UL subframe of a specific TDD UL/DL configuration or the value of K in n-K may be configured together.

When TDM is performed on LTE DL and NR UL of FDD due to harmonic mixing interference, since only partial subframes of LTE DL are used, only a part of LTE UL is used to transmit HARQ ACK/NACK and a scheduled PUSCH. Since HARQ ACK/NACK uses all of LTE DL, it is inevitable to transmit HARQ ACK/NACK on a part of LTE UL. In the case of the scheduled PUSCH, when the remaining part of LTE UL is also used, much network flexibility and performance gain may be expected. This is similar to an issue when a TDD cell schedules FDD UL through cross carrier in current TDD-FDD CA. In this case, it is necessary to design a method of scheduling all UL in a part of DL for a scheduling PUSCH timing.

To this end, when TDM is performed on LTE DL and another UL or DL, it is proposed that a UL subframe for scheduled PUSCH transmission be indicated by a UL grant. When the TDD cell schedules FDD UL through cross carrier in current TDD-FDD CA., a processing time of 6 ms may be regarded as necessary because a time from the UL grant to UL PUSCH transmission is fixed to 6 ms. Therefore, when the UL grant indicates a UL subframe for scheduled PUSCH transmission, the UL subframe may be defined as a timing after at least 6 ms.

The present disclosure has basically been described focusing upon limiting simultaneous transmission or simultaneous transmission and reception in order to avoid IMD or harmonic interference between bands from the perspective of simultaneous transmission and reception in time. However, even if simultaneous transmission or simultaneous transmission or reception is performed through beam adaptation or power control as follows, interference may be fundamentally adapted.

For example, simultaneously transmitted signals of UL bands are transmitted through beam separation. Alternatively, simultaneously transmitted and received signals in UL/DL bands are transmitted through beam separation. In this case, the BS may measure the effect of interference according to combinations of UL beams that are simultaneously transmitted to the UE and inform the UE of the combinations of the beams. Alternatively, the BS may measure the effect of interference according to combinations of UL and DL beams that are simultaneously transmitted and received to and from the UE and inform the UE of the combinations of the beams or cause the UE to select the combinations of the beams.

In another example, simultaneously transmitted signals of UL bands are transmitted through power control. Alternatively, simultaneously transmitted and received signals of UL and DL bands are transmitted through power control. In this case, the BS may inform the UE of power control information in consideration of the effect of interference according to power of UL signals simultaneously transmitted to the UE. Alternatively, the BS may inform the UE of power control information in consideration of the effect of interference according to power of UL and DL signals simultaneously transmitted and received to and from the UE or cause the UE to select the power control information.

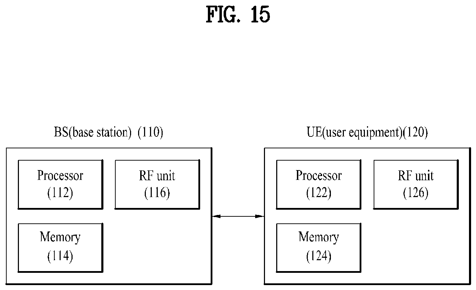

FIG. 15 illustrates a base station (BS) and a user equipment (UE) applicable to an embodiment of the present disclosure.

If a relay node is included in a wireless communication system, backhaul link communication is performed between the BS and the relay node, and access link communication is performed between the relay node and the UE. Therefore, the BS or UE shown in the drawing may be replaced with the relay node in some cases.

Referring to FIG. 15, a wireless communication system includes a base station (BS) 110 and a user equipment (UE) 120. The base station 110 includes a processor 112, a memory 114 and an RF (radio frequency) unit 116. The processor 112 can be configured to implement the procedures and/or methods proposed in the present disclosure. The memory 114 is connected to the processor 112 and stores various kinds of information related to operations of the processor 112. The RF unit 116 is connected to the processor 112 and transmits and/or receives radio or wireless signals. The user equipment 120 includes a processor 122, a memory 124 and an RF unit 126. The processor 122 can be configured to implement the procedures and/or methods proposed in the present disclosure. The memory 124 is connected to the processor 122 and stores various kinds of information related to operations of the processor 122. The RF unit 126 is connected to the processor 122 and transmits and/or receives radio or wireless signals. The base station 110 and/or the user equipment 120 can have a single antenna or multiple antennas.

The above-described embodiments may correspond to combinations of elements and features of the present disclosure in prescribed forms. And, it may be able to consider that the respective elements or features may be selective unless they are explicitly mentioned. Each of the elements or features may be implemented in a form failing to be combined with other elements or features. Moreover, it may be able to implement an embodiment of the present disclosure by combining elements and/or features together in part. A sequence of operations explained for each embodiment of the present disclosure may be modified. Some configurations or features of one embodiment may be included in another embodiment or can be substituted for corresponding configurations or features of another embodiment. And, it is apparently understandable that a new embodiment may be configured by combining claims failing to have relation of explicit citation in the appended claims together or may be included as new claims by amendment after filing an application.

In this disclosure, a specific operation explained as performed by a base station can be performed by an upper node of the base station in some cases. In particular, in a network constructed with a plurality of network nodes including a base station, it is apparent that various operations performed for communication with a user equipment can be performed by a base station or other network nodes except the base station. In this case, 'base station' can be replaced by such a terminology as a fixed station, a Node B, an eNodeB (eNB), an access point and the like.

The embodiments of the present disclosure may be implemented using various means. For instance, the embodiments of the present disclosure may be implemented using hardware, firmware, software and/or any combinations thereof. In case of the implementation by hardware, one embodiment of the present disclosure may be implemented by at least one of ASICs (application specific integrated circuits), DSPs (digital signal processors), DSPDs (digital signal processing devices), PLDs (programmable logic devices), FPGAs (field programmable gate arrays), processor, controller, microcontroller, microprocessor and the like.

In case of the implementation by firmware or software, one embodiment of the present disclosure may be implemented by modules, procedures, and/or functions for performing the above-explained functions or operations. Software code may be stored in a memory unit and may be then driven by a processor.

The memory unit may be provided within or outside the processor to exchange data with the processor through the various means known to the public.

The scope of the disclosure should be determined by reasonable interpretation of the appended claims and all change which comes within the equivalent scope of the disclosure are included in the scope of the disclosure.

Industrial Applicability

In the wireless communication system as described above, the method of transmitting and receiving an LTE-based signal and an NR-based signal and an apparatus therefor are applicable to various wireless communication systems.

**Claims**

1.  A method of transmitting and receiving a signal by a user equipment, UE, (120) dual-connected to a new radio access technology, NR, base station, BS and a long-term evolution, LTE, BS in a wireless communication system, the method comprising:

    receiving, from the NR BS, a control signal for transmitting a NR uplink signal in a scheduled time region to the NR BS;
    transmitting the NR uplink signal based on the control signal in the scheduled time region to the NR BS,
    wherein the NR uplink signal is overlapped with a LTE uplink signal in the scheduled time region due to a timing advance, TA, to the LTE BS and a TA to the NR BS,
    wherein a length of an overlapped duration in the scheduled time region is determined based on a difference between the TA to the LTE BS and the TA to the NR BS,
    wherein the length of the overlapped duration is longer than or equal to a threshold value, the NR uplink signal is dropped, and
    wherein the length of the overlapped duration is shorter than the threshold value, the NR uplink signal and the LTE uplink signal are transmitted simultaneously.

2.  A user equipment, LTE, (120) dual-connected to a new radio access technology, NR, base station, BS, and a long-term evolution, LTE, BS in a wireless communication system, the LTE (120) comprising:

    a radio frequency unit (126); and
    a processor (122) coupled to the radio frequency unit (126),

wherein the processor (122) is configured to:

receive, from the NR BS, a control signal for transmitting a NR uplink signal in a scheduled time region to the NR BS, and

transmitting the NR uplink signal based on the control signal in the scheduled time region to the NR BS, and wherein the NR uplink signal is overlapped with a LTE uplink signal in the scheduled time region due to a timing advance, TA, to the LTE BS and a TA to the NR BS,

wherein a length of an overlapped duration in the scheduled time region is determined based on a difference between the TA to the LTE BS and the TA to the NR BS,

wherein the length of the overlapped duration is longer than or equal to a threshold value, the NR uplink signal is dropped, and

wherein the length of the overlapped duration is shorter than the threshold value, the NR uplink signal and the LTE uplink signal are transmitted simultaneously .

**Patentansprüche**

1. Verfahren zum Senden und Empfangen eines Signals durch ein Benutzergerät, UE, (120), das dual-verbunden ist mit einer New Radio Access Technology, NR, Basisstation, BS, und einer Long Term Evolution, LTE, BS, in einem drahtlosen Kommunikationssystem, wobei das Verfahren umfasst:

Empfangen, von der NR BS, eines Steuersignals, zum Senden eines NR-Uplink-Signals in einer geplanten Zeitregion, an die NR BS;

Senden des NR-Uplink-Signals, basierend auf dem Steuersignal in der geplanten Zeitregion, an die NR BS, wobei sich das NR-Uplink-Signal mit einem LTE-Uplink-Signal in der geplanten Zeitregion überlagert, aufgrund eines Zeitversatzes, TA, zur LTE BS und eines TA zur NR BS,

wobei eine Länge einer Überlagerungsdauer in der geplanten Zeitregion basierend auf einer Differenz zwischen dem TA zur LTE BS und dem TA zur NR BS bestimmt wird,

wobei, wenn die Länge der Überlagerungsdauer länger oder gleich einem Schwellenwert ist, das NR-Uplink-Signal verworfen wird, und

wobei, wenn die Länge der Überlagerungsdauer kürzer als der Schwellenwert ist, das NR-Uplink-Signal und das LTE-Uplink-Signal gleichzeitig gesendet werden.

2. Benutzergerät, UE, (120), das dual-verbunden ist mit einer New Radio Access Technology, NR, Basisstation, BS, und einer Long Term Evolution, LTE, BS, in einem drahtlosen Kommunikationssystem, das UE (120) umfassend:

eine Funkfrequenzeinheit (126); und

einen Prozessor (122), der mit der Funkfrequenzeinheit (126) gekoppelt ist,

wobei der Prozessor (122) konfiguriert ist, zum:

Empfangen, von der NR BS, eines Steuersignals, zum Senden eines NR-Uplink-Signals in einer geplanten Zeitregion, an die NR BS, und

Senden des NR-Uplink-Signals, basierend auf dem Steuersignal in der geplanten Zeitregion, an die NR BS, und

wobei sich das NR-Uplink-Signal mit einem LTE-Uplink-Signal in der geplanten Zeitregion überlagert, aufgrund eines Zeitversatzes, TA, zur LTE BS und eines TA zur NR BS,

wobei eine Länge einer Überlagerungsdauer in der geplanten Zeitregion basierend auf einer Differenz zwischen dem TA zur LTE BS und dem TA zur NR BS bestimmt wird,

wobei, wenn die Länge der Überlagerungsdauer länger oder gleich einem Schwellenwert ist, das NR-Uplink-Signal verworfen wird, und

wobei, wenn die Länge der Überlagerungsdauer kürzer als der Schwellenwert ist, das NR-Uplink-Signal und das LTE-Uplink-Signal gleichzeitig gesendet werden.

**Revendications**

1. Procédé de transmission et de réception d'un signal par un équipement utilisateur, UE, (120) doublement connecté à une station de base, BS, de technologie d'accès de nouvelle radio, NR, et une BS d'évolution à long terme, LTE, dans un système de communication sans fil, le procédé comprenant :

la réception, à partir de la BS NR, d'un signal de commande pour la transmission d'un signal de liaison montante NR dans une région temporelle planifiée à la BS NR ;

la transmission du signal de liaison montante NR sur la base du signal de commande dans la région temporelle planifiée à la BS NR,

dans lequel le signal de liaison montante NR se chevauche avec un signal de liaison montante LTE dans la région temporelle planifiée en raison d'une avance temporelle, TA, vers la BS LTE et d'une TA vers la BS NR,

dans lequel une longueur d'une durée de chevauchement dans la région temporelle planifiée est déterminée sur la base d'une différence entre la TA vers la BS LTE et la TA vers la BS NR,

dans lequel la longueur de la durée de chevauchement est supérieure ou égale à une valeur de seuil, le signal de liaison montante NR est abandonné, et

dans lequel la longueur de la durée de chevauchement est inférieure à la valeur de seuil, le signal de liaison montante NR et le signal de liaison montante LTE sont transmis simultanément.

2.  Equipement utilisateur, UE, (120) doublement connecté à une station de base, BS, de technologie d'accès de nouvelle radio, NR, et une BS d'évolution à long terme, LTE, dans un système de communication sans fil, l'UE (120) comprenant :

une unité radiofréquence (126) ; et
un processeur (122) couplé à l'unité radiofréquence (126),
dans lequel le processeur (122) est configuré pour :

recevoir, à partir de la BS NR, un signal de commande pour la transmission d'un signal de liaison montante NR dans une région temporelle planifiée à la BS NR ;

transmettre le signal de liaison montante NR sur la base du signal de commande dans la région temporelle planifiée à la BS NR, et

dans lequel le signal de liaison montante NR se chevauche avec un signal de liaison montante LTE dans la région temporelle planifiée en raison d'une avance temporelle, TA, vers la BS LTE et d'une TA vers la BS NR,

dans lequel une longueur d'une durée de chevauchement dans la région temporelle planifiée est déterminée sur la base d'une différence entre la TA vers la BS LTE et la TA vers la BS NR,

dans lequel la longueur de la durée de chevauchement est supérieure ou égale à une valeur de seuil, le signal de liaison montante NR est abandonné, et

dans lequel la longueur de la durée de chevauchement est inférieure à la valeur de seuil, le signal de liaison montante NR et le signal de liaison montante LTE sont transmis simultanément.

## FIG. 1

E-UMTS

# FIG. 2

(a) Control-plane protocol stack

(b) User-plane protocol stack

# FIG. 3

EP 3 657 888 B1

# FIG. 4

Wireless frame

| #0 | #1 | #2 | #3 | $\cdots$ | #18 | #19 |

slot

subframe

( a )

One wireless frame, $T_S = 30720T_s = 10$ ms

One half-frame, $153600T_s = 5$ ms

$T_{slot} = 15360T_s$

$30720T_s$

| Subframe #0 | | | Subframe #2 | Subframe #3 | Subframe #4 | Subframe #5 | | | Subframe #7 | Subframe #8 | Subframe #9 |

One subframe, $30720T_s$

Dw PTS   GP   UpPTS

Dw PTS   GP   UpPTS

( b )

EP 3 657 888 B1

# FIG. 5

One DL/UL  slot T

7 OFDM Symbol

Resource block
12 x 7  resource element

resource element

$N^{DL} \times 12$  Deputy Carrier

12  Deputy Carrier

FIG. 6

FIG. 7

FIG. 8

FIG. 9

FIG. 10

FIG. 11

FIG. 12A

FIG. 12B

FIG. 13A

FIG. 13B

FIG. 14

LTE-DL

LTE-UL

NR-DL

NR-UL

FIG. 15

BS(base station) (110)

| Processor (112) | RF unit (116) |
| Memory (114) | |

UE(user equipment)(120)

| Processor (122) | RF unit (126) |
| Memory (124) | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LG ELECTRONICS.** Remaining details on UL sharing between LTE and NR. *3GPP DRAFT; R1-1710354 LTE-NR COEXISTENCE UL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,* 17 June 2017, vol. RAN WG1, http://www.3gpp.org/ftp/tsg_ran/WG1_RL1/TSGR1_AH/NR_AH_1706/Docs